# EUROPÄISCHE PATENTANMELDUNG

(11) **EP 4 834 802 A2**
(43) Veröffentlichungstag der Anmeldung: **04.11.2026**
(21) Anmeldenummer: 26205209.5
(22) Anmeldetag: 04.12.2020
(51) Int. Cl.: B65G 1/04

(54) **REGALLAGERSYSTEM MIT VERBESSERTER TRANSPORTFAHRZEUG-HEBEVORRICHTUNG**

(30) Priorität: 06.12.2019 AT 510672019
(62) Dokumentnummer(n) der früheren Anmeldung(en) nach Art. 76 EPÜ: 20829303.5 / 4 069 610
(71) Anmelder: TGW Logistics GmbH, 4614 Marchtrenk (AT)
(72) Erfinder: SCHAUER, Johannes, 4076 Sankt Marienkirchen an der Polsenz (AT); GLUCK, Stefan, 4625 Offenhausen (AT); WIMMER, Thomas, 4692 Niederthalheim (AT)
(74) Vertreter: Burger, Hannes Alfred

(57) **Zusammenfassung**

Die Erfindung betrifft ein Regallagersystem umfassend ein erstes Lagerregal (2a) und ein zweites Lagerregal (2b), eine Regalgasse (3) zwischen den Lagerregalen, Regalführungsschienen (4a, 4b), welche in übereinander liegenden Fahrebenen jeweils paarweise angeordnet sind, ein Transportfahrzeug (5), welches in der Regalgasse entlang der Regalführungsschienen verfahrbar ist, eine Transportfahrzeug-Hebevorrichtung (6) mit einem vertikal erstreckenden Führungsrahmen (59) und einer an diesem über einen Hubantrieb verstellbar gelagerten Aufnahmevorrichtung (61), welche relativ gegenüber den Regalführungsschienen positionierbare Heberführungsschienen (110a, 110b) umfasst und durch welche das Transportfahrzeug zwischen den Fahrebenen transportierbar ist. Der Hubantrieb umfasst einen Hubmotor (89), welcher mit einem ersten Positioniersystem zusammenwirkt, um die Heberführungsschienen gegenüber den Regalführungsschienen auf einer Fahrebene (E2) zu positionieren. Eine der beiden Heberführungsschienen ist durch einen Stellantrieb (170) in einer Richtung senkrecht zur Fahrebene verstellbar auf dem Hubrahmen gelagert. Der Stellantrieb umfasst einen Stellmotor (171), welcher mit einem zweiten Positioniersystem zusammenwirkt, um die genannte Heberführungsschiene gegenüber eine der Regalführungsschienen einer der Fahrebenen zu positionieren.

## Beschreibung

Die Erfindung betrifft ein Regallagersystem für Ladegüter, wie im Oberbegriff des Anspruchs 1 beschrieben.

Die EP 2 673 220 A1 und EP 2 673 218 A1 offenbaren ein Regallagersystem umfassend
ein erstes Lagerregal mit Lagerplätzen für Ladegüter, die in übereinander liegenden Lagerebenen nebeneinander angeordnet sind,
ein zweites Lagerregal mit Lagerplätzen für Ladegüter, die in übereinander liegenden Lagerebenen nebeneinander angeordnet sind,
eine Regalgasse zwischen dem ersten Lagerregal und dem zweiten Lagerregal,
Regalführungsschienen, welche am ersten Lagerregal und zweiten Lagerregal befestigt und in übereinander liegenden Fahrebenen jeweils paarweise angeordnet sind,
   zumindest ein automatisiertes Transportfahrzeug, welches in der Regalgasse entlang der Regalführungsschienen verfahrbar ist, um die Ladegüter auf die Lagerplätze einzulagern und von den Lagerplätzen auszulagern, und
   eine Transportfahrzeug-Hebevorrichtung mit einem vertikal erstreckenden Führungsrahmen und einer an diesem über einen Hubantrieb verstellbar gelagerten Aufnahmevorrichtung, welche in einer Richtung parallel zu den Regalführungsschienen verlaufende und relativ gegenüber den Regalführungsschienen positionierbare Heberführungsschienen umfasst und durch welche das Transportfahrzeug zwischen den Fahrebenen transportierbar ist.

Die FR 2 710 330 A1, DE 2 113 202 A1, EP 1 716 060 B1 und DE 10 2009 032 406 A1 offenbaren Regallagersysteme, bei denen eine Transportfahrzeug-Hebevorrichtung zum Transport des Transportfahrzeugs zwischen den Fahrebenen vorgesehen ist.

Insbesondere offenbart die DE 2 113 202 A1 ein Regallagersystem für Ladegüter nach dem Oberbegriff des Anspruchs 1.

Während nach der EP 2 673 220 A1, EP 2 673 218 A1, FR 2 710 330 A1, DE 2 113 202 A1 und EP 1 716 060 B1 die Transportfahrzeug-Hebevorrichtung stationär vor der Regalgasse angeordnet ist, kann nach der Ausführung gemäß der DE 10 2009 032 406 A1 die Transportfahrzeug-Hebevorrichtung entlang einer Regallagerseite verfahren und ein Transportfahrzeug zwischen Regalgassen umsetzen.

Solche Transportfahrzeug-Hebevorrichtungen werden vorwiegend eingesetzt, wenn je Regalgasse weniger Transportfahrzeuge als Fahrebenen vorhanden sind.

Bei diesen bekannten Regallagersystemen müssen die Montagearbeiten unter Einhaltung engster Toleranzvorgaben erfolgen. Dies ist aufwendig und kostspielig. Werden breitere Toleranzvorgaben erlaubt, kann über den gesamten Verstellbereich der heb- und senkbaren Aufnahmevorrichtung der Spaltabstand zwischen den Regalführungsschienen an den Lagerregalen und den Heberführungsschienen an der Transportfahrzeug-Hebevorrichtung sehr stark variieren, und/oder in einer Fahrebene ein Höhenversatz zwischen einer zweiten Regalführungsschiene der Regalführungsschienen an den Lagerregalen und einer zweiten Heberführungsschiene der Heberführungsschienen an der Transportfahrzeug-Hebevorrichtung kaum vermieden werden, wenn die heb- und senkbare Aufnahmevorrichtung mit der ersten Heberführungsschiene der Heberführungsschienen gegenüber der ersten Regalführungsschiene der Regalführungsschienen positioniert ist. Dies kann zu beträchtlichen Störungen im Betrieb führen.

Die JPS 56162207 U offenbart ein Regalbediengerät, welches einen vertikal erstreckenden Führungsrahmen und einen an diesem über einen Hubantrieb verstellbar gelagerten Hubrahmen und eine relativ zum Tragrahmen ausfahrbare Ein- und Auslagervorrichtung umfasst. Die Ein- und Auslagervorrichtung weist parallel zueinander angeordnete und durch einen Stellantrieb in einer senkrechten Richtung zu einer Tragebene verstellbar am Tragrahmen gelagerte Tragschienen auf. Die Tragschienen können lediglich gemeinsam und relativ gegenüber Regalführungsschienen eines Lagerregals positioniert werden.

Eine Aufgabe der Erfindung ist es ein verbessertes Regallagersystem zu schaffen. Insbesondere soll eine zuverlässige Übergabe eines Transportfahrzeugs von Regalführungsschienen auf Heberführungsschienen einer Aufnahmevorrichtung der Transportfahrzeug-Hebevorrichtung und umgekehrt möglich sein. Insbesondere sollen auch die Übergabezeiten optimiert werden.

Die Aufgabe der Erfindung wird durch die Merkmale des Anspruchs 1 gelöst.

Erfindungsgemäß ist eine der Heberführungsschienen durch einen Stellantrieb in einer Richtung senkrecht zur Fahrebene verstellbar auf dem Hubrahmen gelagert, und der Stellantrieb einen Stellmotor umfasst, welcher mit einem zweiten Positioniersystem zusammenwirkt, um die genannte Heberführungsschiene gegenüber eine der Regalführungsschienen (bzw. relativ gegenüber die andere der Heberführungsschienen) einer der Fahrebenen zu positionieren.

Grundsätzlich erfolgt die Höhenpositionierung der Aufnahmevorrichtung gegenüber der ersten Regalführungsschiene und zweiten Regalführungsschiene durch den Hubantrieb. Diese Positionierung kann aber noch unzureichend genau sein, beispielweise wenn im Betrieb durch Setzung der Lagerregale mit einer Höhenänderung der Regalführungsschienen zu rechnen ist. In diesem Fall ist es von Vorteil, wenn zusätzlich ein "Feinpositioniersystem" vorgesehen wird, durch welches eine der Heberführungsschienen relativ zu einer der ersten und zweiten Regalführungsschienen auf Höhe einer Fahrebene ausgerichtet werden kann.

Insbesondere erweist es sich von Vorteil, wenn die Aufnahmevorrichtung durch den Hubantrieb gegenüber der ersten Regalführungsschiene und zweiten Regalführungsschiene derart positioniert wird, dass die erste Heberführungsschiene relativ zu einer der ersten Regalführungsschienen ausgerichtet wird. Danach wird die zweite Heberführungsschiene durch den Stellantrieb unabhängig von der ersten Heberführungsschiene derart positioniert, dass die zweite Heberführungsschiene relativ zu einer der zweiten Regalführungsschienen ausgerichtet wird.

Ist die erste Heberführungsschiene gegenüber der ersten Regalführungsschiene und die zweite Heberführungsschiene gegenüber der zweiten Regalführungsschiene ausgerichtet, kann das automatisiert betriebene Transportfahrzeug auf dieser Fahrebene auf die Aufnahmevorrichtung oder von der Aufnahmevorrichtung in die Regalgasse bewegt werden.

Insbesondere erweist es sich von Vorteil, wenn die erste Heberführungsschiene durch den Hubantrieb gegenüber der ersten Regalführungsschiene um ein Ausgleichmaß höher ausgerichtet wird und die zweite Heberführungsschiene durch den Stellantrieb gegenüber der zweiten Regalführungsschiene um ein Ausgleichmaß höher ausgerichtet wird. Das Ausgleichmaß berücksichtigt dabei eine Gewichtskraft des unbeladenen Transportfahrzeugs oder beladenen Transportfahrzeugs. Eine Steuerung ist dazu ausgebildet basierend auf der Gewichtskraft das Ausgleichmaß bzw. einen Höhenausgleichsfaktor zu berechnen, die ihrerseits den Hubantrieb und Stellantrieb entsprechend ansteuert. Sobald das Transportfahrzeug auf die Heberführungsschienen auffährt, sind die erste Regalführungsschiene und die erste Heberführungsschiene als auch die zweite Regalführungsschiene und die zweite Heberführungsschiene in der entsprechenden Fahrebene in vertikaler Richtung exakt zueinander positioniert. Das Überfahren des Transportfahrzeugs auf die Aufnahmevorrichtung kann hochdynamisch und besonders schonend erfolgen.

Es kann sich auch von Vorteil erweisen, wenn ein erstes Führungsprofil vorgesehen ist, welches im Wesentlichen parallel zum Führungsrahmen verläuft und mit den Regalführungsschienen am ersten Lagerregal verbunden ist, und ein zweites Führungsprofil vorgesehen ist, welches im Wesentlichen parallel zum Führungsrahmen verläuft und mit den Regalführungsschienen am zweiten Lagerregal verbunden ist, und eine erste Heberführungsschiene der Heberführungsschienen über eine erste Führungsvorrichtung in einer Richtung parallel zu den (ortsfesten) Regalführungsschienen (daher in Richtung der Regalgasse) bewegbar auf dem Hubrahmen gelagert und über eine erste Koppelungsvorrichtung mit dem ersten Führungsprofil gekoppelt ist, und eine zweite Heberführungsschiene der Heberführungsschienen über eine zweite Führungsvorrichtung in einer Richtung parallel zu den (ortsfesten) Regalführungsschienen (daher in Richtung der Regalgasse) bewegbar auf dem Hubrahmen gelagert und über eine zweite Koppelungsvorrichtung mit dem zweiten Führungsprofil gekoppelt ist.

Das erste Führungsprofil ist mit den Regalführungsschienen am ersten Lagerregal verbunden und das zweite Führungsprofil ist mit den Regalführungsschienen am zweiten Lagerregal verbunden.

Durch die Koppelung zwischen der ersten Heberführungsschiene und dem (vertikalen) ersten Führungsprofil kann ("schwimmend" gelagert) die erste Heberführungsschiene dem Längsverlauf des ersten Führungsprofils folgen. Durch die Koppelung zwischen der zweiten Heberführungsschiene und dem (vertikalen) zweiten Führungsprofil kann ("schwimmend" gelagert) die zweite Heberführungsschiene dem Längsverlauf des zweiten Führungsprofils folgen.

Die Montage der ersten Regalführungsschienen und zweiten Regalführungsschienen ist deutlich weniger aufwendig als im Stand der Technik bekannt. Dies vor allem deswegen, weil die Anforderung an eine exakte fluchtende Ausrichtung der Stirnkanten der in den Fahrebenen übereinander angeordneten ersten Regalführungsschienen und exakte, fluchtende Ausrichtung der Stirnkanten der in den Fahrebenen übereinander angeordneten zweiten Regalführungsschiene reduziert werden kann.

Durch diese Maßnahmen kann über den gesamten Verstellbereich der heb- und senkbaren Aufnahmevorrichtung der Spaltabstand zwischen einander zugewandten Stirnkanten der Regalführungsschienen und den Heberführungsschienen im Wesentlichen konstant gehalten werden. Fertigungsbedingte Toleranzen und/oder montagebedingte Abweichungen haben keine beeinträchtigende Auswirkungen auf den Spaltabstand. Selbst wenn durch Temperaturschwankungen Längenänderungen an den gegenüber den Heberführungsschienen verhältnismäßig langen Regalführungsschienen auftreten, können sich das erste Führungsprofil und das zweite Führungsprofil "mitbewegen" und es passt sich auch der Längsverlauf des ersten Führungsprofils und der Längsverlauf des zweiten Führungsprofils an. Selbst in dieser ungünstigen Situation bleibt der Spaltabstand im Wesentlich unverändert, da durch die Koppelung zwischen der ersten Heberführungsschiene und dem (vertikalen) ersten Führungsprofil bzw. durch die Koppelung zwischen der zweiten Heberführungsschiene und dem (vertikalen) zweiten Führungsprofil, die erste / zweite Heberführungsschiene dem veränderten Längsverlauf des ersten / zweiten Führungsprofils folgen.

Dies wirkt sich besonders günstig auf die Leistung des Regallagersystems aus. Das Transportfahrzeug kann mit hoher Geschwindigkeit den Abstandsspalt überfahren, ohne dadurch einen erhöhten Verschleiß an den Laufrädern in Kauf nehmen zu müssen.

Bevorzugt sind die erste Heberführungsschiene und die zweite Heberführungsschiene unabhängig voneinander in einer Richtung parallel zu den Regalführungsschienen (daher Richtung der Regalgasse) bewegbar auf dem Hubrahmen gelagert.

Durch diese Maßnahme können über den gesamten Verstellbereich der heb- und senkbaren Aufnahmevorrichtung der Spaltabstand zwischen einander zugewandten Stirnkanten der ersten Regalführungsschienen und der ersten Heberführungsschiene im Wesentlich konstant gehalten werden und der Spaltabstand zwischen einander zugewandten Stirnkanten der zweiten Regalführungsschienen und der zweiten Heberführungsschiene im Wesentlich konstant gehalten werden.

Dies erweist sich besonders vorteilhaft, da die Anforderung an eine exakte Ausrichtung der Stirnkanten der je Fahrebene nebeneinander angeordneten ersten Regalführungsschiene und zweiten Regalführungsschiene reduziert werden kann.

Auch wenn dies nicht näher gezeigt ist, so kann die Transportfahrzeug-Hebevorrichtung eine erste Aufnahmevorrichtung und eine zweite Aufnahmevorrichtung umfassen, wovon die erste Aufnahmevorrichtung über einen ersten Hubrahmen und die zweite Aufnahmevorrichtung über einen zweiten Hubrahmen auf dem Führungsrahmen gelagert sind. Der erste Hubrahmen ist über einen ersten Hubantrieb und der zweite Hubrahmen ist über einen zweiten Hubantrieb verstellbar. Eine Steuereinheit steuert den ersten Hubantrieb und zweiten Hubantrieb derart an, dass der erste Hubrahmen und zweite Hubrahmen nicht kollidieren. Die erste Aufnahmevorrichtung und zweite Aufnahmevorrichtung sind bevorzugt wie oben beschrieben aufgebaut und umfassen jeweils die erste Heberführungsschiene und zweite Heberführungsschiene, welche über die ersten / zweiten Koppelungsvorrichtungen mit dem ersten Führungsprofil und dem zweiten Führungsprofil gekoppelt sind.

Gemäß einer Weiterbildung der Erfindung umfasst die erste Koppelungsvorrichtung eine Halterung und an dieser um horizontale Achsen drehbar gelagerte Führungsräder, welche an voneinander abgewandten Führungsbahnen am ersten Führungsprofil abrollbar anliegen, und umfasst die zweite Koppelungsvorrichtung eine Halterung und an dieser um horizontale Achsen drehbar gelagerte Führungsräder, welche an voneinander abgewandten Führungsbahnen am zweiten Führungsprofil abrollbar anliegen.

Das erste Führungsprofil umfasst einen Führungsabschnitt, an welchem die voneinander abgewandten Führungsbahnen ausgebildet sind. Der Führungsabschnitt verläuft bevorzugt in einer senkrecht zur Regalgasse ausgerichteten vertikalen Führungsebene.

Das zweite Führungsprofil umfasst einen Führungsabschnitt, an welchem die voneinander abgewandten Führungsbahnen ausgebildet sind. Der Führungsabschnitt verläuft bevorzugt in einer senkrecht zur Regalgasse ausgerichteten vertikalen Führungsebene.

Dadurch können die erste Koppelungsvorrichtung und zweite Koppelungsvorrichtung einfach aufgebaut werden, die über eine lange Einsatzdauer zuverlässig und ohne Fremdenergie arbeiten.

Gemäß einer vorteilhaften Ausgestaltung umfasst der Führungsrahmen eine Führungsanordnung und der Hubantrieb einen Hubmotor und einen Zugmitteltrieb, wobei der Hubrahmen mit dem Zugmitteltrieb gekoppelt und über Führungsrollen an der Führungsanordnung gelagert ist.

Eine solche Anordnung zeichnet sich durch einen zuverlässigen Betrieb aus.

Es kann sich auch von Vorteil erweisen, wenn der Führungsrahmen einen offenen Profilquerschnitt aufweist, wobei der Profilquerschnitt eine Profilbasis, von dieser vorragende Profilschenkel und an den freien Enden der Profilschenkel abgewinkelte Montageschenkel umfasst, an denen der Führungsrahmen am ersten Lagerregal oder zweiten Lagerregal befestigt ist.

Der Profilquerschnitt kann insbesondere C-förmig (mit nach innen gebogenen Montageschenkeln) oder U-förmig mit nach außen gerichteten, insbesondere nach außen gebogenen Montageschenkeln sein. Durch die offene Bauweise sind die Anbauten am Führungsrahmen gut zugänglich, wodurch nicht nur die Herstellung der Transportfahrzeug-Hebevorrichtung, sondern auch deren Wartung vereinfacht wird. Darüber hinaus ist von Vorteil, dass der Materialeinsatz gering ist und auch das Gewicht auf ein Minimum reduziert wird. Dadurch ist eine einfachere Montage mit geringerem technischen Aufwand möglich und auch die Transportkosten sind gering.

Es erweist sich auch als günstig, wenn
die erste Regalführungsschiene in einem der Transportfahrzeug-Hebevorrichtung benachbarten Ende einen Montageabschnitt ausbildet, in welchem eine vorgefertigte Durchgangsöffnung in einem Abstandsmaß zur Stirnkante der ersten Regalführungsschiene vorgesehen ist,
das erste Führungsprofil eine Reihe vorgefertigter Durchgangsöffnungen ausbildet,
die erste Regalführungsschiene und das erste Führungsprofil über zumindest ein Verbindungsmittel, insbesondere einer Schraube, miteinander verbunden sind, welches die Durchgangsöffnungen durchsetzt,
die zweite Regalführungsschiene in einem der Transportfahrzeug-Hebevorrichtung benachbarten Ende einen Montageabschnitt ausbildet, in welchem eine vorgefertigte Durchgangsöffnung in einem Abstandsmaß zur Stirnkante der zweiten Regalführungsschiene vorgesehen ist,
das zweite Führungsprofil eine Reihe vorgefertigter Durchgangsöffnungen ausbildet, und
die zweite Regalführungsschiene und das zweite Führungsprofil über zumindest ein Verbindungsmittel, insbesondere einer Schraube, miteinander verbunden sind, welches die Durchgangsöffnungen durchsetzt.

Die Durchgangsöffnung an der ersten Regalführungsschiene ist innerhalb vorgegebener (enger) Toleranzen in einem Abstandsmaß zur Stirnkante der ersten Regalführungsschiene angeordnet. Bevorzugt ist die Durchgangsöffnung ein Langloch, dessen Längsachse parallel zur Längsrichtung des ersten Führungsprofils verläuft. Auf diese Weise kann bei der Montage das erste Führungsprofil in Vertikalrichtung relativ zu den ersten Regalführungsschienen positioniert und anschließend mit den ersten Regalführungsschienen verbunden werden.

Die Durchgangsöffnung an der zweiten Regalführungsschiene ist innerhalb vorgegebener (enger) Toleranzen in einem Abstandsmaß zur Stirnkante der zweiten Regalführungsschiene angeordnet. Bevorzugt ist die Durchgangsöffnung ein Langloch, dessen Längsachse parallel zur Längsrichtung des zweiten Führungsprofils verläuft. Auf diese Weise kann bei der Montage das zweite Führungsprofil in Vertikalrichtung relativ zu den zweiten Regalführungsschienen positioniert und anschließend mit den zweiten Regalführungsschienen verbunden werden.

Das erste Führungsprofil umfasst eine Reihe von Durchgangsöffnungen. Ebenso umfasst das zweite Führungsprofil eine Reihe von Durchgangsöffnungen. Die Durchgangsöffnungen der Reihe können in einem beliebigen Rasterabstand vorgesehen werden, was die Flexibilität in der Wahl von Montagepositionen erhöht. Insbesondere sind die Durchgangsöffnungen einer Reihe auf einer Grundlinie und in regelmäßigen Abständen vorgesehen. Soll eine hohe Variabilität an Montagepositionen gegeben sein, so muss bloß der Rasterabstand kleiner gewählt werden. Diese Durchgangsöffnungen sind beispielweise kreiszylindrische Löcher.

Die genannten Durchgangsöffnungen sind bevorzugt vorgefertigt. Damit lässt sich auf der Baustelle ohne großem Montageaufwand eine Verbindung zwischen den ersten Regalführungsschienen / dem ersten Führungsprofil und den zweiten Regalführungsschienen / dem zweiten Führungsprofil herstellen. Es sind lediglich eine Durchgangsöffnung der ersten Regalführungsschienen und zumindest eine Durchgangsöffnung der Reihe des ersten Führungsprofils / eine Durchgangsöffnung der zweiten Regalführungsschienen und zumindest eine Durchgangsöffnung der Reihe des zweiten Führungsprofils zueinander auszurichten, sodass die genannten Durchgangsöffnungen von einem Verbindungsmittel, insbesondere einer Schraube, durchsetzt werden können.

Die ersten Regalführungsschienen / zweiten Regalführungsschienen und das erste Führungsprofil / zweite Führungsprofil können im Werk vorgefertigt werden, eine Nachbearbeitung auf der Baustelle kann entfallen.

Es kann sich als vorteilhaft erweisen, wenn die Transportfahrzeug-Hebevorrichtung eine energieabsorbierende Deformationsvorrichtung umfasst, welche unterhalb des Hubrahmens bzw. der Aufnahmevorrichtung ortsfest angeordnet ist.

Auf diese Weise werden Schäden an der Transportfahrzeug-Hebevorrichtung geringgehalten, wenn der Zugmitteltrieb versagen sollte (weil z.B. ein Zugmittel des Zugmitteltriebs reißt) und dem Hubrahmen nicht eine Sicherheitsbremse zugeordnet ist oder eine Sicherheitsbremse für den Hubrahmen nicht schnell genug reagieren sollte. Befindet sich der Hubrahmen beim Versagen des Zugmitteltriebs unterhalb jener Höhe, welche der Verzögerungs- oder Einfallzeit der Sicherheitsbremse entspricht, so ist die Sicherheitsbremse völlig wirkungslos. Im Fall, dass sich der Hubrahmen beim Reißen des Zugmittels gerade mit seiner maximalen Geschwindigkeit nach unten bewegt, tritt das Problem noch stärker zu Tage. Mit Hilfe der Deformationsvorrichtung kann der Aufprall des Hubrahmens dennoch gedämpft werden. Vorteilhaft weist eine Deformationsvorrichtung in der Regel eine niedrigere Bauhöhe auf als zum Beispiel ein Hydraulikdämpfer. Der Hubrahmen kann daher im Normalbetrieb weiter nach unten bewegt werden als dies beispielsweise beim Einsatz von Hydraulikdämpfern der Fall wäre.

Es erweist sich auch von Vorteil, wenn die energieabsorbierende Deformationsvorrichtung
eine Kraftverteilplatte mit einer Aufprallfläche für den Hubrahmen bzw. die Aufnahmevorrichtung umfasst,
unterhalb der Kraftverteilplatte einen durch Krafteinwirkung plastisch deformierbaren Wabenkörper umfasst, welcher eine bei Kollision des Hubrahmens bzw. der Aufnahmevorrichtung mit der Kraftverteilplatte entstehende Aufprallenergie zumindest zum Teil absorbiert, und
unterhalb des Wabenkörper eine Montageplatte zur Montage der Deformationsvorrichtung umfasst.

Der Hubrahmen weist in vertikaler Projektion nur eine geringe Fläche auf, beziehungsweise ist die Kontaktfläche zwischen dem Hubrahmen und der Deformationsvorrichtung nur gering. Durch die Kraftverteilplatte werden die beim Aufschlagen des Hubrahmens auftretenden Kräfte dennoch gleichmäßig in den Wabenkörper eingeleitet und der Wabenkörper wird gleichmäßig verformt. Grundsätzlich wäre auch möglich, eine Kraftverteilplatte auf dem Hubrahmen anzuordnen. Um die bewegte Masse der Aufnahmevorrichtung bzw. des Hubrahmens gering zu halten, ist es jedoch von Vorteil, die Kraftverteilplatte fix am Wabenkörper zu montieren. Bevorzugt ist die Kraftverteilplatte mit dem Wabenkörper verbunden, insbesondere verklebt. Bevorzugt ist auch die Montageplatte mit dem Wabenkörper verbunden, insbesondere verklebt.

Gemäß einer Ausgestaltung verlaufen Hohlräume des Wabenkörpers in vertikaler Richtung.

Durch die Wabenstruktur ergibt sich ein günstiges Steifigkeits- zu Volumenverhältnis beziehungsweise ein günstiges Steifigkeits- zu Gewichtsverhältnis. Das heißt, der Verformungskörper ist trotz hoher Energieaufnahme bei der Verformung klein beziehungsweise leicht. Dadurch kann ein Verformungskörper mit nur geringer Bauhöhe bereitgestellt werden, welcher das Bewegen des Hubrahmens bis knapp über Bodenhöhe ermöglicht. Generell können in etwa 75% der Bauhöhe des Wabenkörpers für die Dämpfung des Aufpralls ausgenutzt werden. Zudem kann das Stauchverhalten des Verformungskörpers durch die Wabenstruktur gut beeinflusst werden. Schließlich ergeben sich auch günstige Herstell- und Austauschkosten.

Es kann sich auch als günstig erweisen, wenn an dem der Transportfahrzeug-Hebevorrichtung benachbarten Regalgassenende und je Fahrebene eine Anschlagvorrichtung vorgesehen ist, wobei jede Anschlagvorrichtung zwischen einer in den Fahrweg des Transportfahrzeugs hineinbewegten Anschlagstellung und einer aus dem Fahrweg des Transportfahrzeugs herausbewegten Freigabestellung bewegbare Anschlagpuffer umfasst.

Je Fahrebene sind am Regalgassenende Anschlagvorrichtungen vorgesehen. Während an jenem der Transportfahrzeug-Hebevorrichtung abgewandten Regalgassenende eine erste Anschlagvorrichtung mit stationären Anschlagpuffern angeordnet ist, ist an jenem der Transportfahrzeug-Hebevorrichtung zugewandten Regalgassenende eine zweite Anschlagvorrichtung mit Anschlagpuffern vorgesehen, welche zwischen der Anschlagstellung und Freigabestellung bewegbar sind. Soll das Transportfahrzeug einer Fahrebene auf der Aufnahmevorrichtung der Transportfahrzeug-Hebevorrichtung übernommen oder von der Aufnahmevorrichtung auf die Regalgasse abgegeben werden, werden die Anschlagpuffer aus der Anschlagstellung in die Freigabestellung bewegt. Das Transportfahrzeug kann in der Freigabestellung an der zweiten Anschlagvorrichtung vorbeifahren. Befindet sich das Transportfahrzeug vollständig auf der Aufnahmevorrichtung oder vollständig innerhalb der Regalgasse, können die Anschlagpuffer wiederum in die Anschlagstellung bewegt werden, in welcher das Transportfahrzeug blockiert werden kann. Grundsätzlich sei angemerkt, dass die Anschlagvorrichtungen nur im Störfall wirksam sind, beispielsweise wenn das Transportfahrzeug nicht ordnungsgemäß verzögert und dieses gegen eine der Anschlagvorrichtungen auffahren kann.

Nach einer vorteilhaften Ausführung ist jeder Anschlagpuffer auf einer Schwenkklappe angeordnet, deren Schwenkachse parallel zur Regalgasse verläuft. Die Anschlagvorrichtung ist stationär, jedoch der Anschlagpuffer auf einer Schwenkklappe angeordnet. Dadurch wird eine platzsparende Anordnung erreicht, welche zuverlässig arbeitet.

Es kann sich auch als Vorteil erweisen, wenn der Hubrahmen und/oder die Aufnahmevorrichtung auf einer der Regalgasse benachbarten Seite mit einer Betätigungsvorrichtung versehen ist, welche ein erstes Betätigungselement und ein zweites Betätigungselement umfasst, wovon das erste Betätigungselement einem ersten Anschlagpuffer der Anschlagpuffer zugeordnet ist und durch welches der erste Anschlagpuffer aus der in den Fahrweg des Transportfahrzeugs hineinbewegten Anschlagstellung in die aus dem Fahrweg des Transportfahrzeugs herausbewegten Freigabestellung bewegbar ist, und wovon das zweite Betätigungselement einem zweiten Anschlagpuffer der Anschlagpuffer zugeordnet ist und durch welches der zweite Anschlagpuffer aus der in den Fahrweg des Transportfahrzeugs hineinbewegten Anschlagstellung in die aus dem Fahrweg des Transportfahrzeugs herausbewegten Freigabestellung bewegbar ist.

Die Betätigungsvorrichtung ist an der Transportfahrzeug-Hebevorrichtung angeordnet, sodass die Anschlagpuffer der Anschlagvorrichtung fremdbetätigt werden. Es genügt, wenn ein Antriebsmotor das erste Betätigungselement und ein Antriebsmotor das zweite Betätigungselement betätigt. Es ist aber nicht erforderlich, dass dem ersten Anschlagpuffer und zweiten Anschlagpuffer jeder Fahrebene Antriebsmotoren zugeordnet werden. Der Aufbau und die Steuerung der ersten / zweiten Anschlagpuffer gestaltet sich sehr einfach.

Es kann sich auch von Vorteil erweisen, wenn das erste Betätigungselement einen ersten Schwenkhebel aufweist, deren Schwenkachse parallel zur Regalgasse verläuft, und das zweite Betätigungselement einen zweiten Schwenkhebel aufweist, deren Schwenkachse parallel zur Regalgasse verläuft.

Die Schwenkbewegung ermöglicht kurze Stellzeiten und eine zuverlässige Schaltfunktion.

Nach einer bevorzugten Ausführung ist das erste Betätigungselement mit einem ersten Antriebsmotor gekuppelt und ist das zweite Betätigungselement mit einem zweiten Antriebsmotor gekuppelt.

Dadurch können das erste Betätigungselement und zweite Betätigungselement unabhängig voneinander geschaltet werden. Dies ist insbesondere von Vorteil, wenn eine der Heberführungsschienen durch einen Stellantrieb in einer Richtung senkrecht zur Fahrebene verstellbar auf dem Hubrahmen gelagert ist, wie oben beschrieben.

Gemäß einer Ausgestaltung der Erfindung kann es vorgesehen werden, dass das erste Betätigungselement an der ersten Heberführungsschiene gelagert und/oder das zweite Betätigungselement an der zweiten Heberführungsschiene gelagert ist.

Dies ist insbesondere von Vorteil, wenn eine der Heberführungsschienen durch einen Stellantrieb in einer Richtung senkrecht zur Fahrebene verstellbar auf dem Hubrahmen gelagert ist, wie oben beschrieben. Wird nämlich die genannte Heberführungsschiene senkrecht zur Fahrebene verstellt, wird auch das Betätigungselement, welches an der Heberführungsschiene gelagert ist, mitbewegt. Dadurch wird auch nach einem Verstellvorgang in einer Richtung senkrecht zur Fahrebene eine optimale Schaltfunktion gewährleistet.

Nach einer Ausführung der Erfindung kann es vorgesehen sein, dass der Hubrahmen / die Aufnahmevorrichtung auf einer der Regalgasse abgewandten Seite mit einem ersten Anschlagpuffer und zweiten Anschlagpuffer versehen ist, wovon der erste Anschlagpuffer der ersten Heberführungsschiene zugeordnet und zwischen einer in den Fahrweg des Transportfahrzeugs hineinbewegten Anschlagstellung und einer aus dem Fahrweg des Transportfahrzeugs herausbewegten Freigabestellung bewegbar ist, und wovon der zweite Anschlagpuffer der zweiten Heberführungsschiene zugeordnet und zwischen einer in den Fahrweg des Transportfahrzeugs hineinbewegten Anschlagstellung und einer aus dem Fahrweg des Transportfahrzeugs herausbewegten Freigabestellung bewegbar ist.

Das Transportfahrzeug kann gegen den ersten Anschlagpuffer und zweiten Anschlagpuffer auffahren, wenn das Transportfahrzeug auf die Aufnahmevorrichtung bewegt wird. Üblicherweise wird das Transportfahrzeug aber noch vor dem Erreichen des ersten Anschlagpuffers und zweiten Anschlagpuffers gestoppt. Es kann aber durchaus vorkommen, dass das Transportfahrzeug gegen den ersten Anschlagpuffer und zweiten Anschlagpuffer auffährt, wenn dieses aufgrund der Massenträgheit nicht rechtzeitig gebremst wird.

Andererseits sollen der erste Anschlagpuffer und zweite Anschlagpuffer auch aus dem Fahrweg des Transportfahrzeugs herausbewegt werden können, um das Transportfahrzeug von der Aufnahmevorrichtung auf ein (zusätzliches) Puffersystem umsetzen zu können. Verschiedene Ausführungen eines solchen Puffersystems sind beispielweise in der EP 2 673 219 B1 beschrieben.

Dabei wird die Aufnahmevorrichtung auf eine Übergabeebene verstellt, in welcher das Transportfahrzeug von der Aufnahmevorrichtung auf das Puffersystem oder umgekehrt bewegt wird. Zuvor werden der erste Anschlagpuffer und zweite Anschlagpuffer aus der Anschlagstellung in die Freigabestellung bewegt, bevorzugt manuell durch eine Bedienperson. Befindet sich der erste Anschlagpuffer und zweite Anschlagpuffer in dessen Freigabestellung kann das Transportfahrzeug entweder automatisiert oder manuell zwischen der Aufnahmevorrichtung und dem Puffersystem bewegt werden.

Es erweist sich von Vorteil, wenn der erste Anschlagpuffer an der ersten Heberführungsschiene gelagert und/oder der zweite Anschlagpuffer an der zweiten Heberführungsschiene gelagert ist.

Dies ist insbesondere von Vorteil, wenn eine der Heberführungsschienen durch einen Stellantrieb in einer Richtung senkrecht zur Fahrebene verstellbar auf dem Hubrahmen gelagert ist, wie oben beschrieben. Wird nämlich die genannte Heberführungsschiene senkrecht zur Fahrebene verstellt, wird auch der Anschlagpuffer, welcher an der Heberführungsschiene gelagert ist, mitbewegt.

Eine besonders einfache Ausgestaltung ergibt sich, wenn der erste Anschlagpuffer einen ersten Schwenkhebel aufweist, deren Schwenkachse parallel zur Regalgasse verläuft, und der zweite erste Anschlagpuffer einen zweiten Schwenkhebel aufweist, deren Schwenkachse parallel zur Regalgasse verläuft.

Die Schwenkbewegung ermöglicht kurze Stellzeiten und eine zuverlässige Schaltfunktion.

Es erweist sich auch als günstig, wenn die erste Heberführungsschiene eine Lauffläche und eine in dieser vertieft angeordnete Positionieröffnung aufweist, welche an einem der Regalgasse abgewandten Endbereich angeordnet ist und in welcher eines der auf einer ersten Fahrzeugseite des Transportfahrzeugs angeordneten Laufräder mit einem Teilabschnitt einliegt, wenn das Transportfahrzeug auf der Aufnahmevorrichtung positioniert ist.

Durch die Positionieröffnung ist eine "Arretierung" eines der Laufräder möglich und es kann während der Verstellbewegung des Hubrahmens das Transportfahrzeug in seiner Relativlage gehalten werden. Die "Arretierung" kann ohne zusätzlichen mechanischen Aufwand erfolgen. Wird nämlich das Transportfahrzeug auf die Aufnahmevorrichtung bewegt, rollen die Laufräder auf den Heberführungsschienen und eines der Laufräder wird in der Positionieröffnung positioniert, wenn sich das Transportfahrzeug auf der Aufnahmevorrichtung befindet. Das Transportfahrzeug kann mit einem Laufrad der Laufräder auf einer ersten Fahrzeugseite gegenüber der Aufnahmevorrichtung in x-Richtung positioniert werden.

Grundsätzlich wäre es auch denkbar, dass die erste Heberführungsschiene eine Lauffläche und eine in dieser vertieft angeordnete erste Positionieröffnung aufweist, welche erste Positionieröffnung an einem der Regalgasse abgewandten Endbereich angeordnet ist und in welcher eines der auf einer ersten Fahrzeugseite des Transportfahrzeugs angeordneten Laufräder mit einem Teilabschnitt einliegt, wenn das Transportfahrzeug auf der Aufnahmevorrichtung positioniert ist, und eine in dieser vertieft angeordnete zweite Positionieröffnung aufweist, welche zweite Positionieröffnung an einem der Regalgasse benachbarten Endbereich angeordnet ist und in welcher eines der auf einer ersten Fahrzeugseite des Transportfahrzeugs angeordneten Laufräder mit einem Teilabschnitt einliegt, wenn das Transportfahrzeug auf der Aufnahmevorrichtung positioniert ist.

Von Vorteil ist auch, wenn die zweite Heberführungsschiene eine Lauffläche und auf dieser mit gegenseitigem Abstand angeordnete Gleitbeläge aufweist, sodass die auf einer zweiten Fahrzeugseite des Transportfahrzeugs angeordneten Laufräder auf den Gleitbelägen aufliegen, wenn das Transportfahrzeug auf der Aufnahmevorrichtung positioniert ist.

Während das Transportfahrzeug auf der Aufnahmevorrichtung über zumindest ein Laufrad auf einer ersten Fahrzeugseite "arretiert" werden kann, können die Laufräder auf einer zweiten Fahrzeugseite gleiten. Dies ist insbesondere von Vorteil, wenn der Hubrahmen über längere Verstellwege mit hohen Verstellgeschwindigkeiten bewegt wird und die Heberführungsschienen durch die Koppelungsvorrichtungen in einer Richtung parallel zur Regalgasse mitbewegt werden. Werden während diesen überlagerten Stellbewegungen Vibrationen in den Hubrahmen / die Aufnahmevorrichtung eingeleitet, so können die Laufräder auf der zweiten Fahrzeugseite relativ zu der zweiten Heberführungsschiene "gleiten". Ein Anhaften der Laufräder auf der zweiten Fahrzeugseite wird vermieden, sodass auch bei Vibrationen das Transportfahrzeug keine ruckartigen Verlagerungen quer zur Längserstreckung der ersten Heberführungsschiene und zweiten Heberführungsschiene erfährt. Insgesamt wird also ein übermäßiges Verdrehen des Transportfahrzeugs relativ gegenüber der ersten Heberführungsschiene und zweiten Heberführungsschiene nahezu vermieden.

Nach einer möglichen Ausführung umfasst das Regallagersystem
eine Fördertechnik zum Transport von Ladegütern, und
eine Ladegut-Manipulationseinheit, an welche die Fördertechnik zum Transport von Ladegütern anschließt und welche zum Einlagern von Ladegütern eine erste Ladegut-Transportvorrichtung und eine erste Puffervorrichtung und zum Auslagern von Ladegütern eine zweite Ladegut-Transportvorrichtung und eine zweite Puffervorrichtung aufweist,
wobei die erste Puffervorrichtung in übereinander liegenden Bereitstellebenen angeordnete Bereitstellvorrichtungen und die zweite Puffervorrichtung in übereinander liegenden Bereitstellebenen angeordnete Bereitstellvorrichtungen aufweist,
wobei die erste Ladegut-Transportvorrichtung die Fördertechnik zum Transport von Ladegütern und die Bereitstellvorrichtungen der ersten Puffervorrichtung fördertechnisch verbindet,
wobei die zweite Ladegut-Transportvorrichtung die Fördertechnik zum Transport von Ladegütern und die Bereitstellvorrichtungen der zweiten Puffervorrichtung fördertechnisch verbindet, und
wobei das zumindest eine automatisierte Transportfahrzeug in der Regalgasse entlang der Regalführungsschienen vor den Lagerplätzen, der ersten Puffervorrichtung und zweiten Puffervorrichtung verfahrbar ist und die Ladegüter zwischen der ersten Puffervorrichtung und den Lagerplätzen oder zwischen den Lagerplätzen und der zweiten Puffervorrichtung transportiert.

Die Fördertechnik zum Transport von Ladegütern kann insbesondere
eine erste Fördervorrichtung zum Antransport von Ladegütern zur ersten Ladegut-Transportvorrichtung, und
eine zweite Fördervorrichtung zum Abtransport von Ladegütern von der zweiten Ladegut-Transportvorrichtung
umfassen.

Zum besseren Verständnis der Erfindung wird diese anhand der nachfolgenden Figuren näher erläutert.

Es zeigen jeweils in stark vereinfachter, schematischer Darstellung:
- Fig.1a, 1b: ein Regallagersystem mit einer Detailansicht auf eine Ladegut-Manipulationseinheit gemäß Fig. 1a, und mit einer Detailansicht auf eine Transportfahrzeug-Hebevorrichtung gemäß Fig. 1b;
- Fig. 2a, 2b: das Regallagersystem nach den Fig. 1a, 1b in Draufsicht;
- Fig. 3: eine Ansicht auf eine Regalgasse gemäß Fig. 2b mit einem Teilabschnitt eines Transportfahrzeugs;
- Fig. 4: eine Ladegut-Hebevorrichtung des Regallagersystems;
- Fig. 5: eine Transportfahrzeug-Hebevorrichtung des Regallagersystems in einer ersten Ausführung mit zusätzlichem Stellantrieb für eine zweite Heberführungsschiene;
- Fig. 6: eine Ausschnittsvergrößerung aus Fig. 2b mit einer Draufsicht auf einen Führungsrahmen der Transportfahrzeug-Hebevorrichtung und die Befestigung des Führungsrahmens am ersten Lagerregal;
- Fig.7: eine Ausschnittsvergrößerung aus Fig. 5 mit dem Führungsrahmen und die Anordnung von Führungsrahmensegmenten;
- Fig.8: den Führungsrahmen und die Führungsanordnung für einen Hubrahmen, in einer Querschnittsdarstellung;
- Fig. 9: die Transportfahrzeug-Hebevorrichtung in einer Seitenansicht und mit einer Darstellung des Hubantriebs für den Hubrahmen;
- Fig. 10a: eine Ausschnittsvergrößerung aus dem Regallagersystem und mit einer Darstellung der Anschlagpuffer, welche in eine Anschlagstellung bewegt sind;
- Fig. 10b, 10d: eine Ausschnittsvergrößerung aus dem Regallagersystem und mit einer Darstellung der Anschlagpuffer, welche in eine Freigabestellung bewegt sind;
- Fig. 10c: eine Ausschnittsvergrößerung aus dem Regallagersystem und mit einer Darstellung eines ersten Führungsprofils und die Befestigung des Führungsprofils an den Regalführungsschienen;
- Fig. 11: eine Detailansicht auf einen Hubrahmen und die Aufnahmevorrichtung der Transportfahrzeug-Hebevorrichtung;
- Fig. 12: eine Detailansicht auf einen Stellantrieb für eine der Heberführungsschienen, den Hubrahmen und die Aufnahmevorrichtung der Transportfahrzeug-Hebevorrichtung;
- Fig. 13: eine Detailansicht auf den Hubrahmen und die Aufnahmevorrichtung der Transportfahrzeug-Hebevorrichtung und mit einer Darstellung der Anschlagpuffer, welche in eine Freigabestellung bewegt sind;
- Fig. 14: eine Ausschnittsvergrößerung aus Fig. 2b.

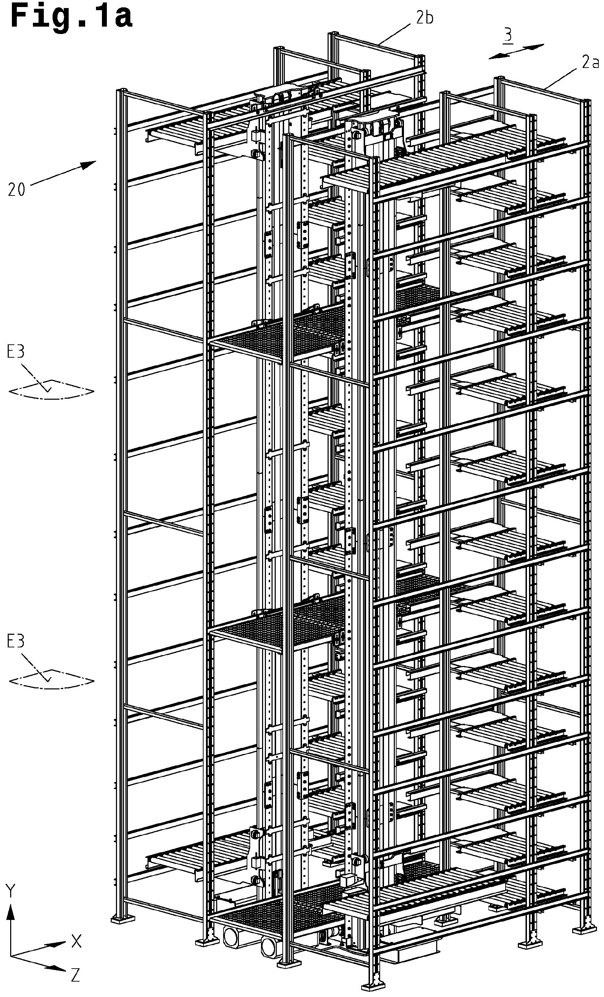

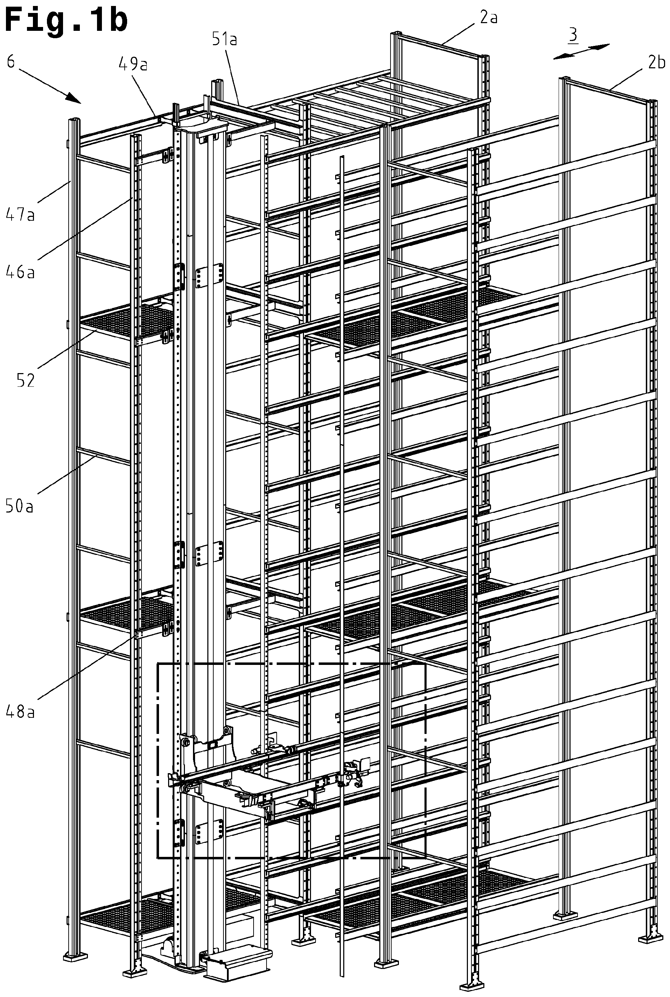

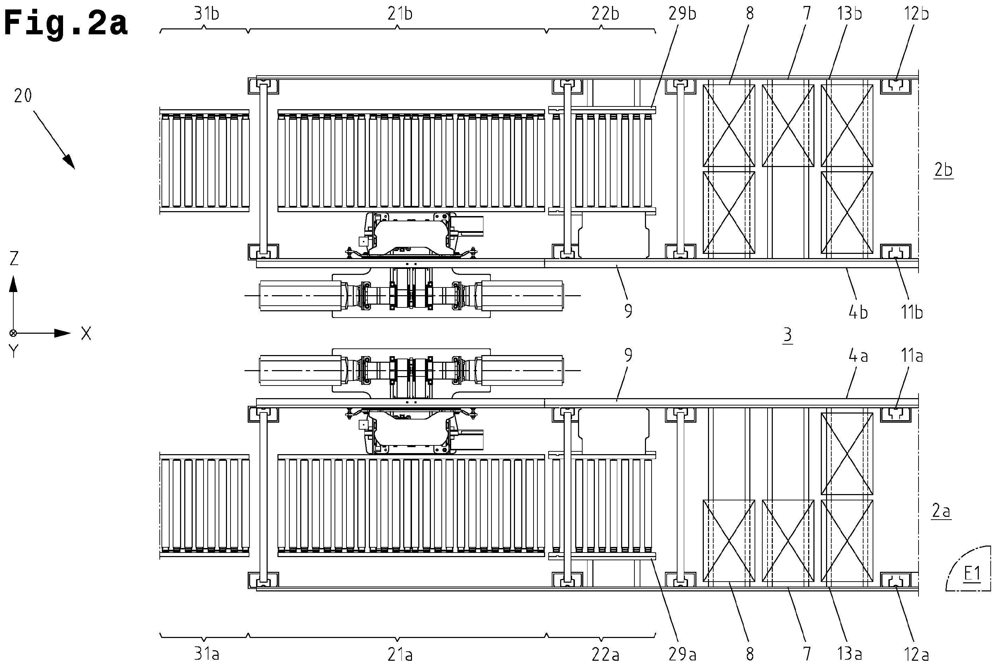

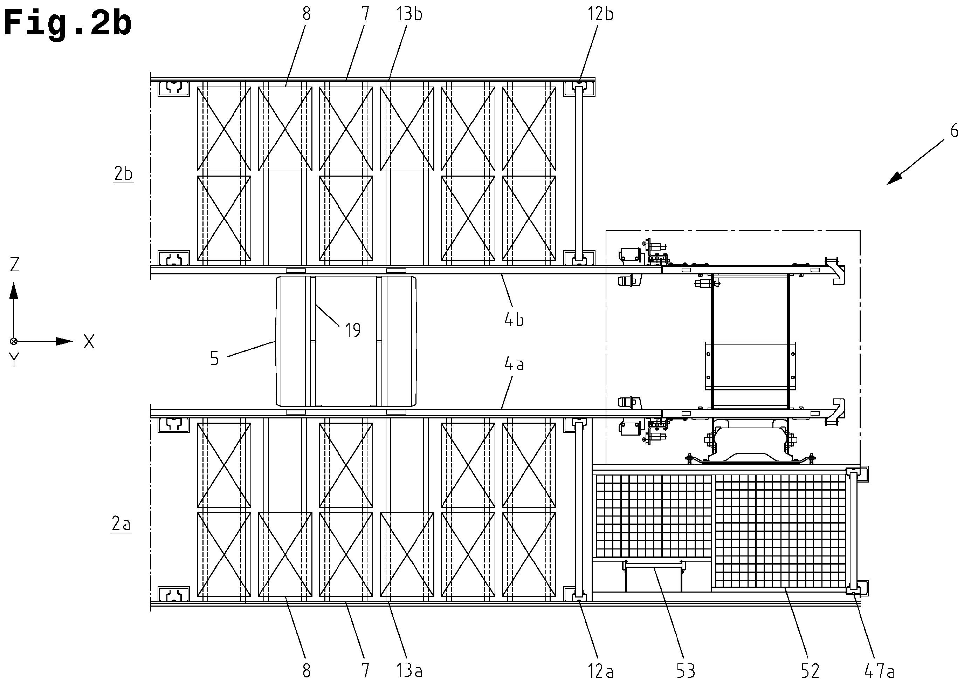

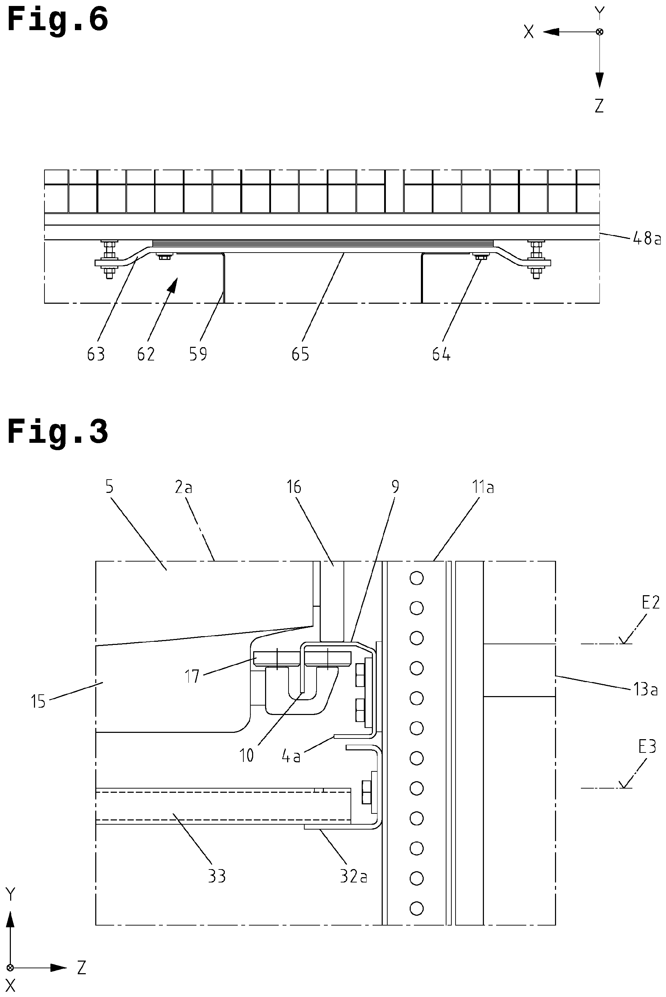

In den Fig. 1a, 1b, 2a und 2b ist eine mögliche Ausführung eines Regallagersystems in unterschiedlichen Ansichten gezeigt. Das Regallagersystem umfasst ein erstes Lagerregal 2a, ein zweites Lagerregal 2b, eine Regalgasse 3 zwischen dem ersten Lagerregal 2a und dem zweiten Lagerregal 2b, erste Regalführungsschienen 4a, zweite Regalführungsschienen 4b, zumindest ein automatisiertes Transportfahrzeug 5 (aus Gründen der besseren Übersicht ausschließlich in Fig. 2b und Fig. 3 gezeigt) und eine Transportfahrzeug-Hebevorrichtung 6. Die Regalgasse 3 verläuft in einer x-Richtung.

Das erste Lagerregal 2a und zweite Lagerregal 2b umfassen jeweils Lagerplätze 7, die in übereinander liegenden Lagerebenen (E1) nebeneinander angeordnet sind. Auf den Lagerplätzen 7 können Ladegüter 8 abgestellt werden.

Die ersten Regalführungsschienen 4a und zweiten Regalführungsschienen 4b verlaufen in Richtung der Regalgasse 3 und sind in übereinander liegenden Fahrebenen (E2) jeweils paarweise angeordnet. Insbesondere sind die ersten Regalführungsschienen 4a am ersten Lagerregal 2a und zweiten Regalführungsschienen 4b am zweiten Lagerregal 2b befestigt.

Nach einer möglichen Ausführung kann je Fahrebene (E2) eine der Regalführungsschienen 4a, 4b der paarweise angeordneten Regalführungsschienen 4a, 4b eine erste Führung 9 und eine zweite Führung 10 ausbilden, wie in Fig. 3 eingetragen. Die andere der paarweise angeordneten Regalführungsschienen 4a, 4b bildet ausschließlich eine erste Führung 9 aus. Wie in Fig. 3 ersichtlich, bildet die erste Regalführungsschiene 4a die erste Führung 9 und zweite Führung 10 aus. Die erste Führung 9 erstreckt sich parallel zur Längsrichtung des Lagerregales 2a, 2b und in einer parallel zur Fahrebene (E2) verlaufenden ersten Führungsebene. Die zweite Führung 10 erstreckt sich parallel zur Längsrichtung des Lagerregales 2a, 2b und in einer die Fahrebene (E2) schneidenden zweiten Führungsebene.

Insbesondere umfasst das erste Lagerregal 2a vordere Regalsteher 11a, hintere Regalsteher 12a, je Lagerebene (E1) in x-Richtung verlaufende und mit den vorderen Regalstehern 11a verbundene vordere Längstraversen, je Lagerebene (E1) in x-Richtung verlaufende und mit den hinteren Regalstehern 12a verbundene hintere Längstraversen, und einen je Lagerebene (E1) zwischen der vorderen Längstraverse und der hinteren Längstraverse angeordneten Regalboden 13a mit den Lagerplätzen 7. Bevorzugt sind die ersten Regalführungsschienen 4a an den vorderen Längstraversen ausgebildet.

Insbesondere umfasst das zweite Lagerregal 2b vordere Regalsteher 11b, hintere Regalsteher 12b, je Lagerebene (E1) in x-Richtung verlaufende und mit den vorderen Regalstehern 11b verbundene vordere Längstraversen, je Lagerebene (E1) in x-Richtung verlaufende und mit den hinteren Regalstehern 12b verbundene hintere Längstraversen, und einen je Lagerebene (E1) zwischen der vorderen Längstraverse und der hinteren Längstraverse angeordneten Regalboden 13b mit den Lagerplätzen 7. Bevorzugt sind die zweiten Regalführungsschienen 4b an den vorderen Längstraversen ausgebildet.

Es sei an dieser Stelle hingewiesen, dass die Anzahl der Lagerregale und Regalgassen variieren kann. Beispielsweise kann das Regallagersystem ein erstes Lagerregal, ein zweites Lagerregal, ein drittes Lagerregal und ein viertes Lagerregal umfassen. Eine erste Regalgasse ist zwischen dem ersten Lagerregal und dem zweiten Lagerregal und eine zweite Regalgasse ist zwischen dem dritten Lagerregal und dem vierten Lagerregal angeordnet.

Ebenso kann die Anzahl der automatisierten Transportfahrzeuge 5 variieren. Bevorzugt sind in der einzigen Regalgasse 3 oder je Regalgasse 3 eine Vielzahl an Transportfahrzeugen 5 vorgesehen.

Das eine Transportfahrzeug 5 oder die Transportfahrzeuge 5 sind insbesondere als Einebenenregalbediengeräte ausgebildet und dienen zum Einlagern von Ladegütern 8 und Auslagern von Ladegütern 8.

Das Transportfahrzeug 5, wie in den Fig. 2b und 3 eingetragen, umfasst einen Grundrahmen 15, Laufräder 16, einen (nicht dargestellten) Fahrantrieb, welcher mit zumindest einem Laufrad 16 gekoppelt ist, und eine in der Fig. 2b schematisch eingetragene Ein- und Auslagervorrichtung 19 zum Einlagern von Ladegütern 8 und Auslagern von Ladegütern 8.

Die Laufräder 16 sind am Grundrahmen 15 drehbar gelagert, wovon erste Laufräder 16 auf einer ersten Fahrzeugseite auf der ersten Führung 9 der ersten Regalführungsschiene 4a abrollbar aufliegen und zweite Laufräder 16 auf einer zweiten Fahrzeugseite auf der ersten Führung 9 der zweiten Regalführungsschiene 4b abrollbar aufliegen.

Wie in Fig. 3 ersichtlich, umfasst das Transportfahrzeug 5 zumindest eine Führungseinheit, um das Transportfahrzeug 5 auf der Fahrbewegung entlang der Regalführungsschiene 4a, 4b und der Heberführungsschiene einer Aufnahmevorrichtung der Transportfahrzeug-Hebevorrichtung 6 (wie nachfolgend beschrieben) geführt zu bewegen. Die Führungseinheit ist über eine Lagervorrichtung am Grundrahmen 15 montiert und umfasst zu beiden Seiten der zweiten Führung 12 und auf der zweiten Führung 10 an voneinander abgewandten Führungsabschnitten abrollbar anliegende Führungsräder 17.

Wie in den Fig. 1a und 2a ersichtlich, kann das Regallagersystem zusätzlich eine Ladegut-Manipulationseinheit 20 umfassen, welche zum Einlagern von Ladegütern 8 eine erste Ladegut-Transportvorrichtung 21a und eine erste Puffervorrichtung 22a und zum Auslagern von Ladegütern 8 eine zweite Ladegut-Transportvorrichtung 21b und eine zweite Puffervorrichtung 22b aufweist.

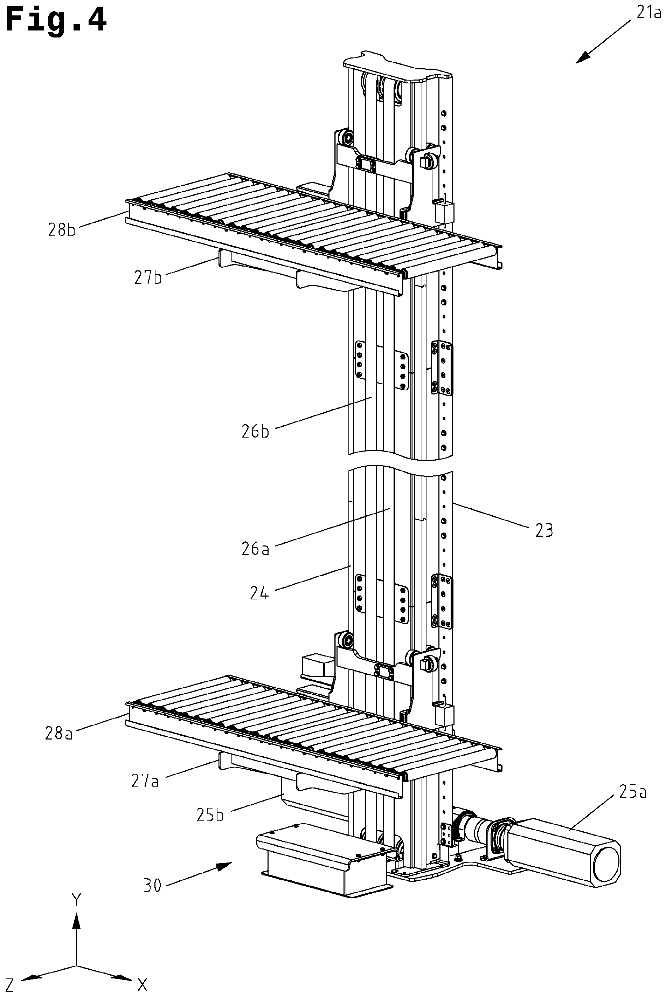

Eine mögliche Ausführung einer ersten Ladegut-Transportvorrichtung 21a ist in Fig. 4 näher gezeigt. Die erste Ladegut-Transportvorrichtung 21a umfasst nach einer möglichen Ausführung:
einen ortsfest aufgestellten und am ersten Lagerregal 2a befestigten Vertikalmast 23 mit einer Hubführung 24,
einen ersten Hubantrieb mit einer ersten Antriebsstation 25a und einem ersten Zugmitteltrieb 26a,
einen an der Hubführung 24 gelagerten und durch den ersten Hubantrieb vertikal bewegbaren ersten Hubrahmen 27a, welcher mit dem Zugmitteltrieb 26a des ersten Hubantriebs verbunden ist, und
eine am ersten Hubrahmen 27a angeordnete erste Transportvorrichtung 28a, welche zumindest zum Transport der Ladegüter 8 zwischen einer der Bereitstellvorrichtungen 29a (wie nachfolgend beschrieben) und der ersten Transportvorrichtung 28a ausgebildet ist.

Die erste Ladegut-Transportvorrichtung 21a kann (optional) nach einer möglichen Ausführung zusätzlich umfassen:
einen zweiten Hubantrieb mit einer zweiten Antriebsstation 25b und einem zweiten Zugmitteltrieb 26b,
einen an der Hubführung 24 gelagerten und durch den zweiten Hubantrieb vertikal bewegbaren zweiten Hubrahmen 27b, welcher mit dem Zugmitteltrieb 26b des zweiten Hubantriebs verbunden ist, und
eine am zweiten Hubrahmen 27b angeordnete zweite Transportvorrichtung 28b, welche zumindest zum Transport der Ladegüter 8 zwischen einer der Bereitstellvorrichtungen 29a (wie nachfolgend beschrieben) und der zweiten Transportvorrichtung 28b ausgebildet ist.

Wie in der Fig. 4 eingetragen, kann die erste Ladegut-Transportvorrichtung 21a auch eine energieabsorbierende Deformationsvorrichtung 30 umfassen, welche unterhalb des Hubrahmens 27a ortsfest angeordnet ist. Auf diese Weise werden Schäden an der Ladegut-Manipulationseinheit geringgehalten, wenn der Zugmitteltrieb versagen sollte (weil z.B. ein Zugmittel des Zugmitteltriebs reißt) und dem Hubrahmen nicht eine Sicherheitsbremse zugeordnet ist oder eine Sicherheitsbremse für den Hubrahmen nicht schnell genug reagieren sollte. Vorteilhaft weist eine Deformationsvorrichtung in der Regel eine niedrigere Bauhöhe auf als zum Beispiel ein Hydraulikdämpfer. Der Hubrahmen kann daher im Normalbetrieb weiter nach unten bewegt werden als dies beispielsweise beim Einsatz von Hydraulikdämpfern der Fall wäre.

Die erste Puffervorrichtung 22a umfasst in zumindest einigen der Fahrebenen (E2) Bereitstellvorrichtungen 29a, die jeweils für das Zwischenpuffern eines Ladeguts 8 oder mehrerer Ladegüter 8 ausgebildet sind und in der x-Richtung benachbart an einer der Seiten der ersten Ladegut-Hebevorrichtung 21a oder in der x-Richtung benachbart zu beiden Seiten der ersten Ladegut-Hebevorrichtung 21a angeordnet sind.

Wie ausschließlich in Fig. 2a eingetragen, ist an die Ladegut-Manipulationseinheit 20 eine erste Fördertechnik 31a zum Antransport von Ladegütern 8 zur ersten Ladegut-Transportvorrichtung 21a angeschlossen, wobei die erste Ladegut-Transportvorrichtung 21a die erste Fördertechnik 31a und die Bereitstellvorrichtungen 29a fördertechnisch verbindet.

Eine mögliche Ausführung einer zweiten Ladegut-Transportvorrichtung 21b ist nicht näher gezeigt, da diese der ersten Ladegut-Transportvorrichtung 21a entspricht. Die zweite Ladegut-Transportvorrichtung 21b umfasst mit Bezug auf Fig. 4 nach einer möglichen Ausführung:
einen ortsfest aufgestellten und am ersten Lagerregal 2b befestigten Vertikalmast 23 mit einer Hubführung 24,
einen ersten Hubantrieb mit einer ersten Antriebsstation 25a und einem ersten Zugmitteltrieb 26a,
einen an der Hubführung 24 gelagerten und durch den ersten Hubantrieb vertikal bewegbaren ersten Hubrahmen 27a, welcher mit dem Zugmitteltrieb 26a des ersten Hubantriebs verbunden ist, und
eine am ersten Hubrahmen 27a angeordnete erste Transportvorrichtung 28a, welche zumindest zum Transport der Ladegüter 8 zwischen einer der Bereitstellvorrichtungen 29b (wie nachfolgend beschrieben) und der ersten Transportvorrichtung 28a ausgebildet ist.

Die zweite Ladegut-Transportvorrichtung 21b kann (optional) nach einer möglichen Ausführung zusätzlich umfassen:
einen zweiten Hubantrieb mit einer zweiten Antriebsstation 25b und einem zweiten Zugmitteltrieb 26b,
einen an der Hubführung 24 gelagerten und durch den zweiten Hubantrieb vertikal bewegbaren zweiten Hubrahmen 27b, welcher mit dem Zugmitteltrieb 26b des zweiten Hubantriebs verbunden ist, und
eine am zweiten Hubrahmen 27b angeordnete zweite Transportvorrichtung 28b, welche zumindest zum Transport der Ladegüter 8 zwischen einer der Bereitstellvorrichtungen 29b (wie nachfolgend beschrieben) und der zweiten Transportvorrichtung 28b ausgebildet ist.

Die zweite Puffervorrichtung 22b umfasst in zumindest einigen der Fahrebenen (E2) Bereitstellvorrichtungen 29b, die jeweils für das Zwischenpuffern eines Ladeguts 8 oder mehrerer Ladegüter 8 ausgebildet sind und in der x-Richtung benachbart an einer der Seiten der zweiten Ladegut-Hebevorrichtung 21b oder in der x-Richtung benachbart zu beiden Seiten der zweiten Ladegut-Hebevorrichtung 21b angeordnet sind.

Wie ausschließlich in Fig. 2a eingetragen, ist an die Ladegut-Manipulationseinheit 20 eine zweite Fördertechnik 30b zum Abtransport von Ladegütern 8 von der zweiten Ladegut-Transportvorrichtung 21b angeschlossen, wobei die zweite Ladegut-Transportvorrichtung 21b die zweite Fördertechnik 30b und die Bereitstellvorrichtungen 29b fördertechnisch verbindet.

Nach der gezeigten Ausführung sind die erste Ladegut-Transportvorrichtung 21a und zweite Ladegut-Transportvorrichtung 21b voneinander getrennt vorgesehen. Andererseits können die erste Ladegut-Transportvorrichtung 21b und zweite Ladegut-Transportvorrichtung 21b auch kombiniert und durch eine einzige Ladegut-Transportvorrichtung gebildet werden. Gemäß dieser Ausführung sind die erste Transportvorrichtung 28a und die zweite Transportvorrichtung 28b an einem einzigen Vertikalmast 23 gelagert. Optional kann auch nur eine Transportvorrichtung vorgesehen werden. Nach dieser Ausführung ist an die Ladegut-Manipulationseinheit 20 eine erste Fördertechnik zum Antransport von Ladegütern zur Ladegut-Transportvorrichtung und eine zweite Fördertechnik zum Abtransport von Ladegütern 8 von der zweiten Ladegut-Transportvorrichtung angeschlossen.

Wie in den Fig. 1a und 3 ersichtlich, kann das Regallagersystem auch in übereinander liegenden Wartungsebenen E3 am ersten Lagerregal 2a vorgesehene Montagetraversen 32a und am zweiten Lagerregals 2b vorgesehene Montagetraversen 32b aufweisen, auf welchen Gehstege 33 (in den Fig. 2a und 2b aus Gründen der besseren Übersicht nicht eingetragen) befestigt sind. Dadurch können Wartungsarbeiten je Wartungsebene E3 durchgeführt werden.

Wie in Fig. 1b und 2b ersichtlich, umfasst eines der ersten und zweiten Lagerregale 2a, 2b zusätzlich einen vorderen Regalsteher 46a, einen hinteren Regalsteher 47a und je Wartungsebene E3 vordere Montagetraversen 48a und hintere Montagetraversen 49a. Die vorderen Montagetraversen 48a und hinteren Montagetraversen 49a je Wartungsebene E3 verlaufen parallel zu den Regalführungsschienen 4a. Der vordere Regalsteher 46a und hintere Regalsteher 47a können durch horizontal erstreckende und jeweils mit ihrem ersten Ende am vorderen Regalsteher 46a und mit ihrem zweiten Ende am hinteren Regalsteher 47a befestigte erste Rahmenprofile 50a miteinander verbunden werden. Auch können am vorderen Regalsteher 11a und hintere Regalsteher 12b zusätzlich horizontal erstreckende und jeweils mit ihrem ersten Ende am vorderen Regalsteher 11a und mit ihrem zweiten Ende am hinteren Regalsteher 12a befestigte zweite Rahmenprofile 51a vorgesehen werden.

Wie in der Fig. 1b eingetragen, sind je Wartungsebene E3 an den vorderen Montagetraversen 48a und hinteren Montagetraversen 49a Gehstege 52 befestigt und sind die Wartungsebene E3 über eine Leiter 53 erreichbar. Dadurch können Wartungsarbeiten an der Transportfahrzeug-Hebevorrichtung 6 je Wartungsebene E3 durchgeführt werden.

Im Nachfolgenden wird die Transportfahrzeug-Hebevorrichtung 6 anhand der Fig. 1b, 2b, 5 bis 14 näher beschrieben. Eine solche Transportfahrzeug-Hebevorrichtung 6 findet vornehmlich Anwendung, wenn innerhalb der Regalgasse 3 weniger Transportfahrzeuge 5 als Fahrebenen (E2) vorhanden sind, oder auf einer Fahrebene (E2) zusätzlich ein Transportfahrzeug 5 benötigt wird. Zudem kann eine solche Transportfahrzeug-Hebevorrichtung 6 dazu eingesetzt werden, ein Transportfahrzeug 5 zwischen einer Fahrebene (E2) und einer Übergabeebene zu transportieren, in welcher das Transportfahrzeug 5 zwischen einer Aufnahmevorrichtung (wie nachfolgen beschrieben) und einem aus der EP 2 673 219 B1 offenbarten Puffersystem umgesetzt werden kann.

Die Transportfahrzeug-Hebevorrichtung 6 umfasst einen vertikal erstreckenden Führungsrahmen 59 und einen an diesem über einen Hubantrieb verstellbar gelagerten Hubrahmen 60, auf welchem eine Aufnahmevorrichtung 61 angeordnet ist.

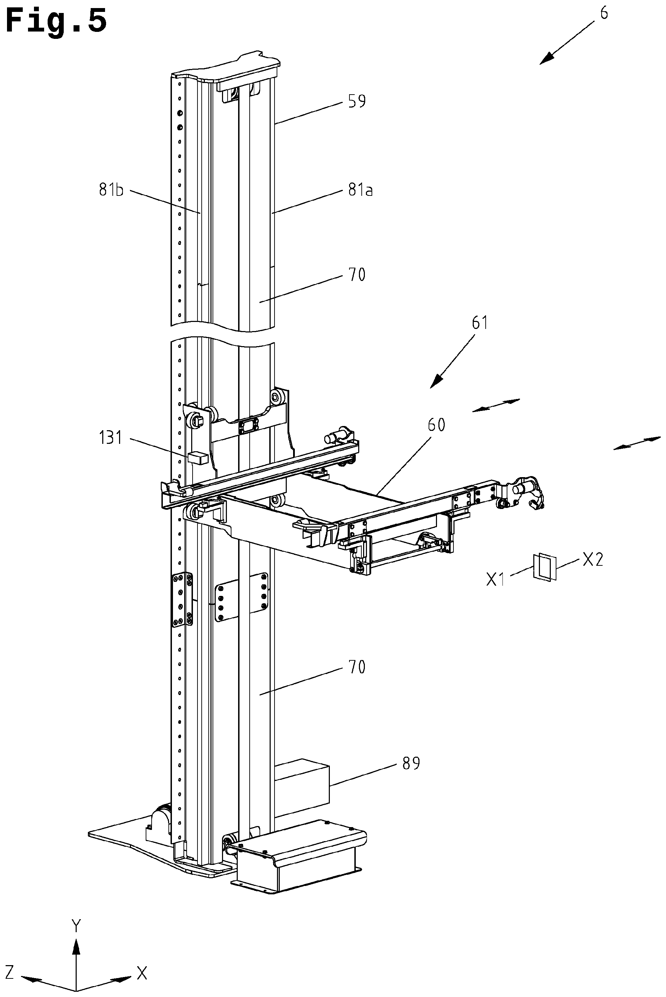

Wie in den Fig. 5 und 6 ersichtlich, bildet der Führungsrahmen 59 an einer von der Hubrahmen 60 abgewandten Rückseite Montageabschnitte 62 aus, mit dem die Transportfahrzeug-Hebevorrichtung 6 an den vorderen Montagetraversen 48a gelagert ist. Konkret ist die Verbindung zwischen dem Führungsrahmen 59 und den Montagetraversen 48a durch gekröpfte (das heißt doppelt gewinkelte) Befestigungselemente 63 hergestellt. Alternativ könnten auch einfach gewinkelte Befestigungselemente 63 eingesetzt werden. Im Speziellen wird der Führungsrahmen 59 über Verbindungsmittel 64 mit den Montagetraversen 48a verbunden. Als Verbindungsmittel 64 sind im gezeigten Beispiel Schrauben vorgesehen. Denkbar ist aber auch eine Verbindung durch Nieten oder durch Klemmen. Durch die Befestigung des Führungsrahmens 59 an mehreren vertikal übereinander liegenden Montageabschnitten 62, ist der Führungsrahmen 59 trotz des nachfolgend noch beschriebenen offenen Profilquerschnitt außerordentlich stabil, insbesondere gegen Verdrehung, selbst bei Masthöhen von 30 bis 40 m.

In der Fig. 6 ist erkennbar, dass zur lotrechten Ausrichtung des Führungsrahmens 59 beziehungsweise zum Abstandsausgleich zwischen dem Führungsrahmen 59 und den Montagetraversen 48a Futterplatten 65 in verschiedener Anzahl und/oder Stärke zwischen dem Führungsrahmen 59 und den Montagetraversen 48a eingefügt werden können.

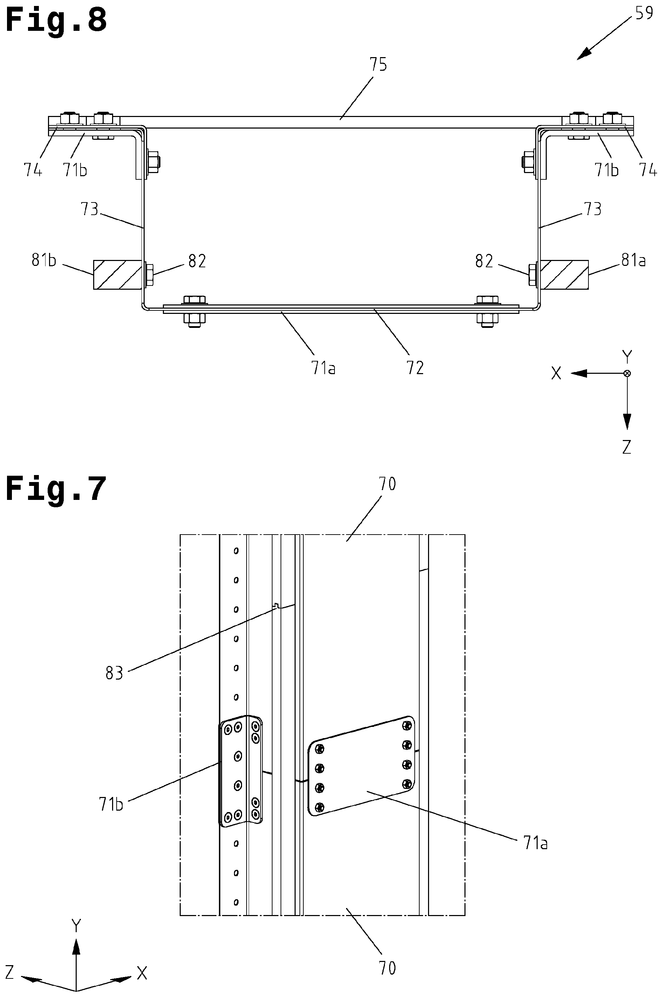

Der Führungsrahmen 59 umfasst im gezeigten Ausführungsbeispiel eine Vielzahl von Führungsrahmensegmenten 70, die im Wesentlichen spaltfrei vertikal übereinander zusammengefügt sind, wie in den Fig. 5 und 7 dargestellt. Die Führungsrahmensegmenten 70 werden bevorzugt miteinander verschraubt, beispielsweise mit Verbindungsplatten 71a, 71b.

Wie in Fig. 8 dargestellt, weist der Führungsrahmen 59 einen offenen Profilquerschnitt auf, wobei der Profilquerschnitt eine Profilbasis 72, von dieser vorragende Profilschenkel 73 und an den freien Enden der Profilschenkel 73 abgewinkelte Montageschenkel 74 umfasst, an denen der Führungsrahmen 59 mit den vorderen Montagetraversen 48a am ersten Lagerregal 2a befestigt ist.

Der Profilquerschnitt kann somit insbesondere C-förmig (mit nach innen gebogenen Montageschenkeln) oder U-förmig mit nach außen gerichteten, insbesondere nach außen gebogenen Montageschenkeln sein. Durch die offene Bauweise sind die Anbauten am Führungsrahmen 59 gut zugänglich, wodurch nicht nur die Herstellung der Transportfahrzeug-Hebevorrichtung 6, sondern auch deren Wartung vereinfacht wird. Die Montageschenkel sind um eine Vertikalachse des Führungsrahmens 59 nach außen oder innen gerichtet (insbesondere um eine vertikale Achse abgebogen) und bieten eine Auflagefläche für die Montage des Führungsrahmens 59 an den vorderen Montagetraversen 48a. Die Stabilität des Führungsrahmens 59 kann durch Verbindungsstreben 75 noch weiter gesteigert. Diese sind an der Rückseite des Führungsrahmens 59 angeordnet und über Verbindungsmittel, insbesondere Schrauben, an den Montageschenkel 74 befestigt, wie in Fig. 8 ersichtlich.

Durch die Befestigung des Führungsrahmens 59 am ersten Lagerregal 2a, insbesondere an mehreren vertikal übereinander liegenden Montageabschnitten 62, ist der Führungsrahmen 59 trotz der offenen Bauweise außerordentlich stabil, insbesondere gegen Verdrehung und selbst bei Masthöhen von 30 bis 40 m. Darüber hinaus ist es von Vorteil, dass der Materialeinsatz gering ist und auch das Gewicht auf ein Minimum reduziert wird. Dadurch ist eine einfachere Montage mit geringerem technischen Aufwand möglich und auch die Transportkosten sind gering. Grundsätzlich ist aber auch denkbar, dass der Vertikalmast einen geschlossenen Profilquerschnitt aufweist und insbesondere als Rechteckrohr ausgebildet ist. Der Führungsrahmen 59 weist dann eine besonders hohe Torsionssteifigkeit auf.

Auch wenn die offene Bauweise des Führungsrahmens 59 von Vorteil ist, wäre grundsätzlich auch denkbar, dass der Führungsrahmen 59 einen geschlossenen Profilquerschnitt aufweist und insbesondere als Rechteckrohr ausgebildet ist.

Wie aus den Fig. 5, 7 und 8 zudem gut ersichtlich, ist der Führungsrahmen 59 mit einer Führungsanordnung versehen, auf welcher die Aufnahmevorrichtung 61 über einen Hubrahmen 60 gelagert ist. Die Führungsanordnung umfasst in diesem Beispiel eine erste Führungsleiste 81a und eine zweite Führungsleiste 81b, welche voneinander getrennt und parallel in Längsrichtung des Führungsrahmens 59 verlaufen und über Verbindungsmittel 82 bevorzugt lösbar mit dem Führungsrahmen 59 verbunden sind. Insbesondere sind die erste Führungsleiste 81a und die zweite Führungsleiste 81b aus blank gezogenem oder geschliffenem Flachstahl gebildet, der Gewindebohrungen zur Befestigung desselben auf dem Führungsrahmen 59 mit Hilfe von Schrauben aufweist. Trotz kostengünstiger und modularer Bauweise läuft der Hubrahmen 60 an der Führungsanordnung ruhig und es werden nur geringe Vibrationen in den Führungsrahmen 59 eingeleitet.

Zudem ist die Führungsanordnung zur Führung des ersten Hubrahmens 60 vorteilhaft in vertikaler Richtung durch formkomplementäre Stoßverbindungen 83 unterteilt. Insbesondere kann eine Teilung zwischen den Führungsrahmensegmenten 70 in vertikaler Richtung versetzt zu den Stoßverbindungen 83 der Führungsanordnung angeordnet sein, so wie das im vorliegenden Beispiel der Fall ist.

Durch die vorgeschlagenen Maßnahmen wird einerseits der Transport des Führungsrahmens 59 und dessen Einbringung in das Gebäude am Aufstellort erleichtert, andererseits ermöglicht dessen Teilung einen modularen Aufbau der Transportfahrzeug-Hebevorrichtung 6. Konkret können je nach geforderter Hubhöhe verschieden viele Führungsrahmensegmenten 70 zu einem Führungsrahmen 59 verbaut werden. Die Führungsrahmensegmenten 70 werden bevorzugt miteinander verschraubt, beispielsweise mit den Verbindungsplatten 71a, 71b. Weil die Stoßverbindung 83 der Führungsanordnung nicht auf gleicher Höhe wie eine Teilung zwischen zwei Führungsrahmensegmenten 70 angeordnet ist, wirkt sich eine (unerwünschte) Verlagerung von Führungsrahmensegmenten 70 zueinander, wie sie beispielsweise durch Verspannungen der Führungsrahmensegmenten 70 zueinander auftreten kann, nicht oder nur in geringem Maß auf die Stoßverbindungen 83 der Führungsanordnung aus. Dadurch kann das Auftreten von Vibrationen beziehungsweise Schwingungen beim Bewegen des Hubrahmens 60 geringgehalten werden. Weiterhin wird eine Biegebelastung, die vom Hubrahmens 60 in die Führungsanordnung am Führungsrahmen 59 eingeleitet wird, über den Stoß der Führungsrahmensegmente 70 hinweg geleitet.

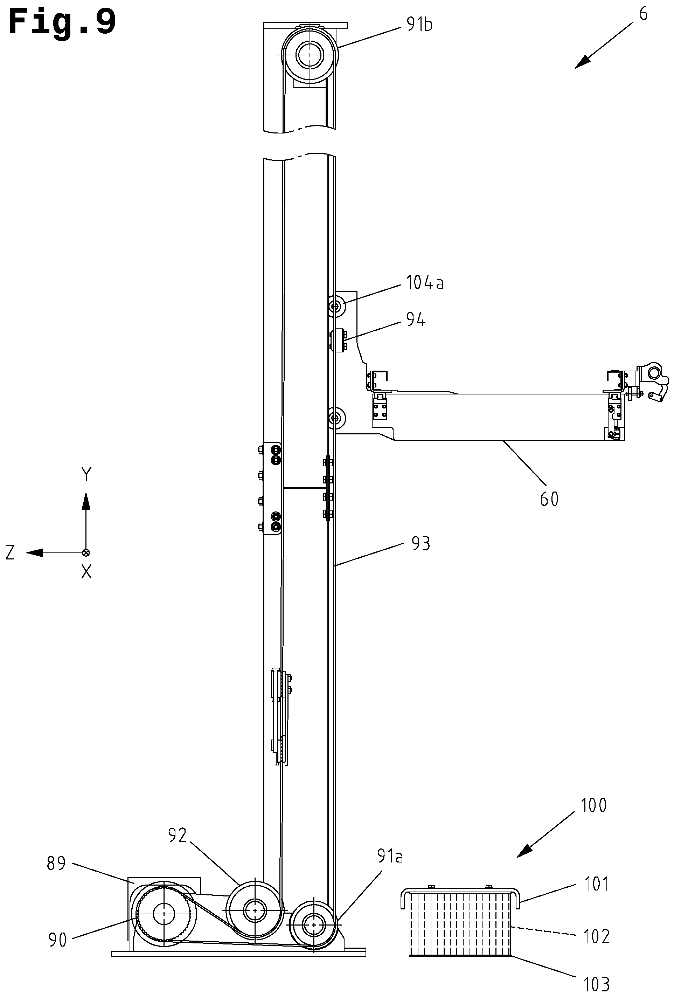

Der Hubantrieb, wie dieser in Fig. 5 und 9 ersichtlich ist, umfasst eine Antriebsstation und einen Zugmitteltrieb. Die Antriebsstation umfasst zumindest einen Hubmotor 89. Der Hubmotor 89 ist beispielsweise ein Servomotor mit einem Drehgeber, beispielweise ein Inkrementalgeber.

Der Zugmitteltrieb kann ein Antriebsrad 90, ein unteres Umlenkrad 91a, ein oberes Umlenkrad 91b, gegebenenfalls ein Führungsrad 92 und ein um das Antriebsrad 90, das untere Umlenkrad 91a, das obere Umlenkrad 91b und gegebenenfalls das Führungsrad 92 geführtes Zugmittel 93 umfassen. Das Antriebsrad 90 ist mit dem Hubmotor 89 gekuppelt. Der Hubrahmen 60 ist über eine Klemme 94 an das Zugmittel 93 gekoppelt.

Das untere Umlenkrad 91a ist im Fußbereich des Führungsrahmens 59 und das obere Umlenkrad 91b im Kopfbereich des Führungsrahmens 59 angeordnet.

Ist auch ein Führungsrad 92 vorgesehen, so ist dieses im Fußbereich des Führungsrahmens 59 zwischen dem unteren Umlenkrad 91a und dem Antriebsrad 90 angeordnet. Das Antriebsrad 90 ist mit einem Abstand zum Führungsrahmen 59 und im Fußbereich des Führungsrahmens 59 angeordnet.

Wie in den Fig. 9 im Detail dargestellt, kann die Transportfahrzeug-Hebevorrichtung 6 eine energieabsorbierende Deformationsvorrichtung 100 umfassen, welche unterhalb der Aufnahmevorrichtung 61 bzw. unterhalb des Hubrahmens 60 ortsfest angeordnet ist. Zum Beispiel ist die Deformationsvorrichtung 100 direkt auf einem Fußboden montiert.

In vorteilhafter Weise umfasst die energieabsorbierende Deformationsvorrichtung 100 eine Kraftverteilplatte 101 mit einer Aufprallfläche für die Aufnahmevorrichtung 61 bzw. den Hubrahmen 60, und einen unterhalb der Kraftverteilplatte 101 einen durch Krafteinwirkung plastisch deformierbaren Wabenkörper 102, welcher eine bei Kollision der Aufnahmevorrichtung 61 bzw. den Hubrahmen 60 mit der Kraftverteilplatte 101 entstehende Aufprallenergie zumindest zum Teil absorbiert, und eine unterhalb des Wabenkörpers 102 eine Montageplatte 103 zur Montage der Deformationsvorrichtung 100.

Die Hohlräume des Wabenkörpers 102 verlaufen in vertikaler Richtung.

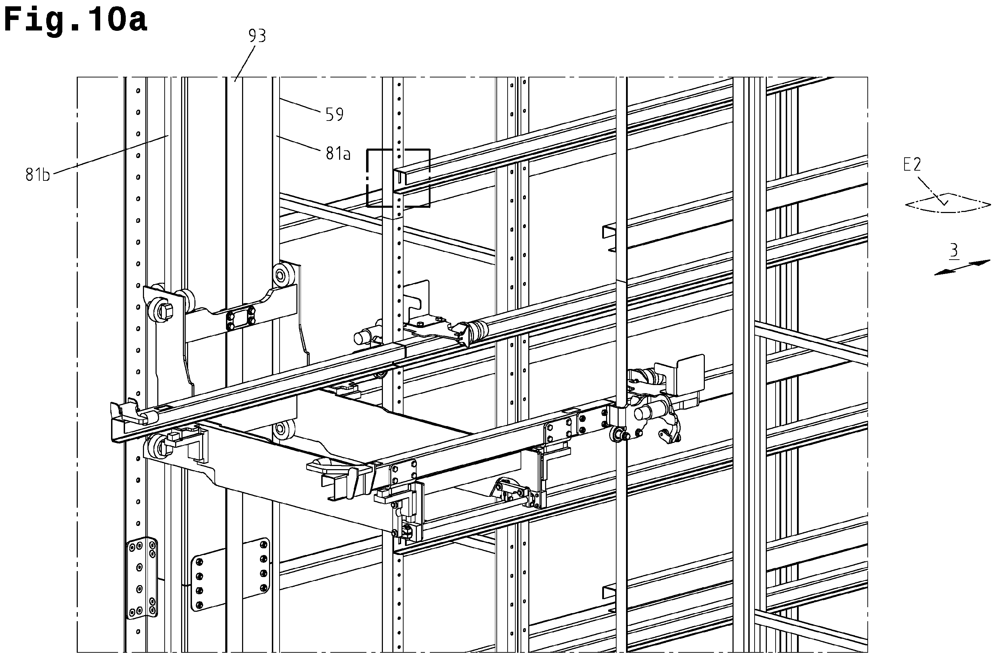

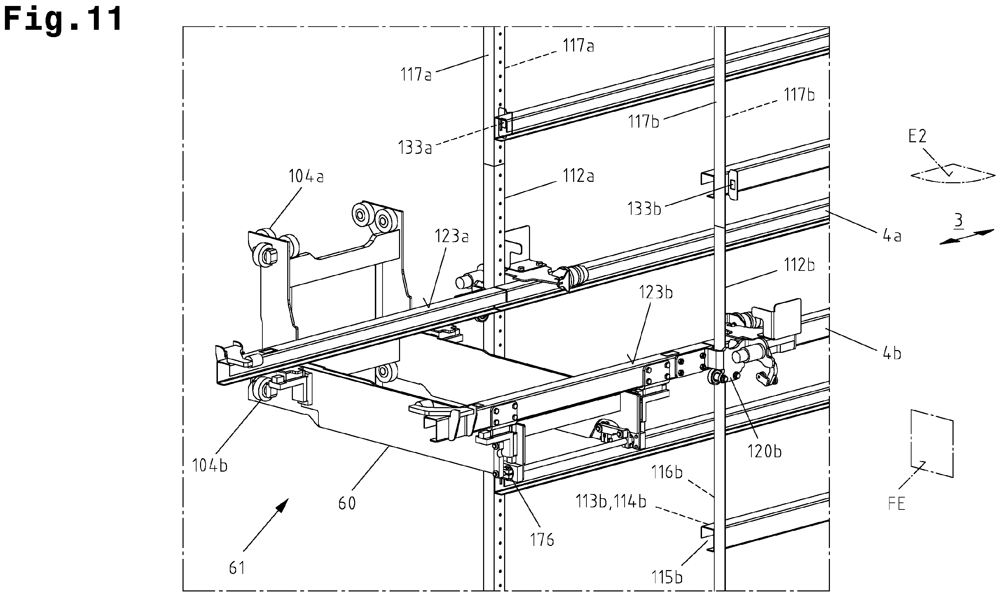

In den Fig. 10a bis 10d, 11 und 12 ist die über den Hubrahmen 60 am Führungsrahmen 59 gelagerte Aufnahmevorrichtung 61 näher dargestellt. Der Hubrahmen 60 umfasst an den Führungsleisten 81a, 81b abrollbar anliegende Führungsräder 104a, 104b und ist mit dem Zugmittel 93 gekoppelt. Fig. 11 zeigt aus Gründen der besseren Übersicht eine vereinfachte Darstellung der Fig. 10a.

Die Aufnahmevorrichtung 61 umfasst in einer Richtung parallel zu den Regalführungsschienen 4a, 4b verlaufende und relativ gegenüber den Regalführungsschienen 4a, 4b positionierbare Heberführungsschienen 110a, 110b. Das Transportfahrzeug 5 kann durch die Aufnahmevorrichtung 61 zwischen einer ersten Fahrebene E2 und einer zweiten Fahrebene E2 oder zwischen einer Fahrebene E2 und einer Übergabeebene zu einem Puffersystem transportiert, wie oben beschrieben.

Die erste Heberführungsschiene 110a ist über eine erste Führungsvorrichtung (x-Führungsvorrichtung) in einer Richtung parallel zu den Regalführungsschienen 4a bewegbar auf dem Hubrahmen 60 gelagert und über eine erste Koppelungsvorrichtung 111a mit einem ersten Führungsprofil 112a gekoppelt.

Die zweite Heberführungsschiene 110b ist über eine zweite Führungsvorrichtung (x-Führungsvorrichtung) in einer Richtung parallel zu den Regalführungsschienen 4b bewegbar auf dem Hubrahmen 60 gelagert und über eine zweite Koppelungsvorrichtung 111b mit einem zweiten Führungsprofil 112b gekoppelt.

Die erste Heberführungsschiene 110a und/oder die zweite Heberführungsschiene 110b kann zwischen einer hinteren Relativposition (siehe strichpunktierte Ebene X1 in Fig. 5) und einer vorderen Relativposition (siehe strichpunktierte Ebene X2 in Fig. 5) insbesondere stufenlos verstellt werden.

Das erste Führungsprofil 112a verläuft im Wesentlichen parallel zum Führungsrahmen 59 und ist mit den Regalführungsschienen 4a am ersten Lagerregal 2a verbunden. Das zweite Führungsprofil 112b verläuft im Wesentlichen parallel zum Führungsrahmen 59 und ist mit den Regalführungsschienen 4b am zweiten Lagerregal 2b verbunden.

Im Speziellen wird das erste Führungsprofil 112a über Verbindungsmittel 113a mit den Regalführungsschienen 4a verbunden und wird das zweite Führungsprofil 112b über Verbindungsmittel 113b mit den Regalführungsschienen 4b verbunden. Als Verbindungsmittel 113a, 113b sind im gezeigten Beispiel Schrauben vorgesehen. Denkbar ist aber auch eine Verbindung durch Nieten oder durch Klemmen.

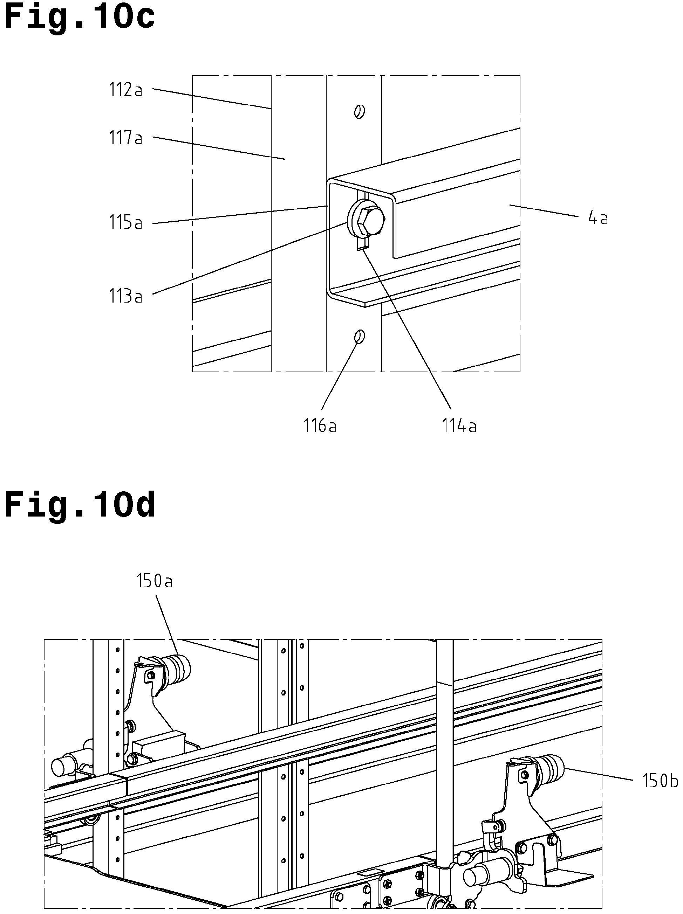

Wie in den Fig. 10c und Fig. 11 ersichtlich, bildet die erste Regalführungsschiene 4a in einem der Transportfahrzeug-Hebevorrichtung 6 benachbarten Ende einen Montageabschnitt aus, in welchem eine vorgefertigte Durchgangsöffnung 114a vorgesehen ist. Die Durchgangsöffnung 114a ist in einem vorgegebenen Abstandsmaß zur Stirnkante 115a der ersten Regalführungsschiene 4a angeordnet. Bevorzugt ist die Durchgangsöffnung 114a als Längsschlitz ausgebildet, welcher in Richtung der Längserstreckung des ersten Führungsprofils 112a verläuft. Die zweite Regalführungsschiene 4b bildet in einem der Transportfahrzeug-Hebevorrichtung 6 benachbarten Ende einen Montageabschnitt aus, in welchem eine vorgefertigte Durchgangsöffnung 114b vorgesehen ist. Die Durchgangsöffnung 114b ist in einem vorgegebenen Abstandsmaß zur Stirnkante 115b der zweiten Regalführungsschiene 4b angeordnet. Bevorzugt ist die Durchgangsöffnung 114b als Längsschlitz ausgebildet, welcher in Richtung der Längserstreckung des zweiten Führungsprofils 112b verläuft.

Es erweist sich von Vorteil, wenn das erste Führungsprofil 112a eine vorgefertigte Reihe von Durchgangsöffnungen 116a umfasst, wobei die Reihe in Richtung der Längserstreckung des ersten Führungsprofils 112a verläuft. Ebenso umfasst das zweite Führungsprofil 112b eine vorgefertigte Reihe von Durchgangsöffnungen 116b, wobei die Reihe in Richtung der Längserstreckung des zweiten Führungsprofils 112b verläuft. Die Durchgangsöffnungen 116a, 116b sind entweder in einer Reihe über die gesamte Länge des ersten Führungsprofils 112a / zweiten Führungsprofils 112b durchgehend oder in einer Reihe jeweils nur in Montageabschnitten des ersten Führungsprofils 112a / zweiten Führungsprofils 112b unterbrochen angeordnet. Nach letzterer Ausführung sind in jedem Montageabschnitt des betreffenden ersten Führungsprofils 112a / zweiten Führungsprofils 112b jedoch eine Mehrzahl von Durchgangslöchern 116a, 116b vorhanden. Die Durchgangsöffnungen 116a, 116b können in einem beliebigen Rasterabstand vorgesehen werden. Beispielweisen sind die Durchgangsöffnungen 116a, 116b Durchgangsbohrungen.

Bevorzugt bildet das erste Führungsprofil 112a in einem Montageabschnitt die vorgefertigte Reihe von Durchgangslöchern aus und bevorzugt bildet das zweite Führungsprofil 112b an einem Montageabschnitt die vorgefertigte Reihe von Durchgangslöchern aus.

Das erste Führungsprofil 112a bildet voneinander abgewandte Führungsbahnen 117a aus und das zweite Führungsprofil 112b bildet voneinander abgewandte Führungsbahnen 117b aus.

Bevorzugt bildet das erste Führungsprofil 112a an einem (ersten) Führungsabschnitt die voneinander abgewandten Führungsbahnen 117a aus und bevorzugt bildet das zweite Führungsprofil 112b an einem (zweiten) Führungsabschnitt die voneinander abgewandten Führungsbahnen 117b aus.

Der (erste) Führungsabschnitt verläuft in einer senkrecht zur Regalgasse 3 ausgerichteten vertikalen Führungsebene FE. Ebenso verläuft der (zweite) Führungsabschnitt 114b in einer senkrecht zur Regalgasse 3 ausgerichteten vertikalen Führungsebene FE.

Nach der gezeigten Ausführung ist das erste Führungsprofil 112a und das zweite Führungsprofil 112b im Querschnitt L-förmig gestaltet. Grundsätzlich kann das erste Führungsprofil 112a und das zweite Führungsprofil 112b im Querschnitt auch rechteckförmig gestaltet sein.

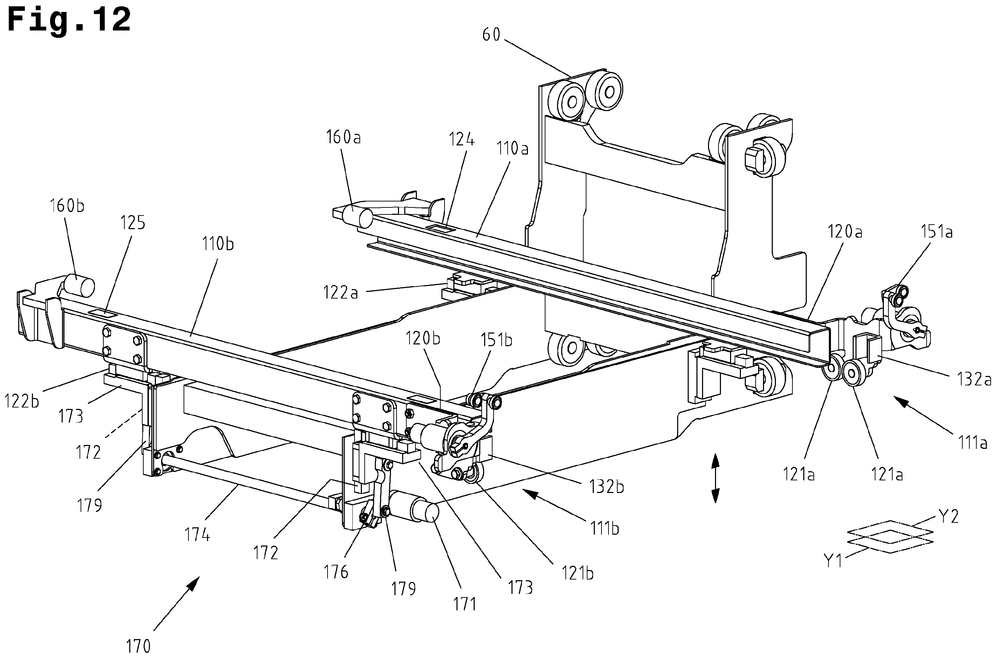

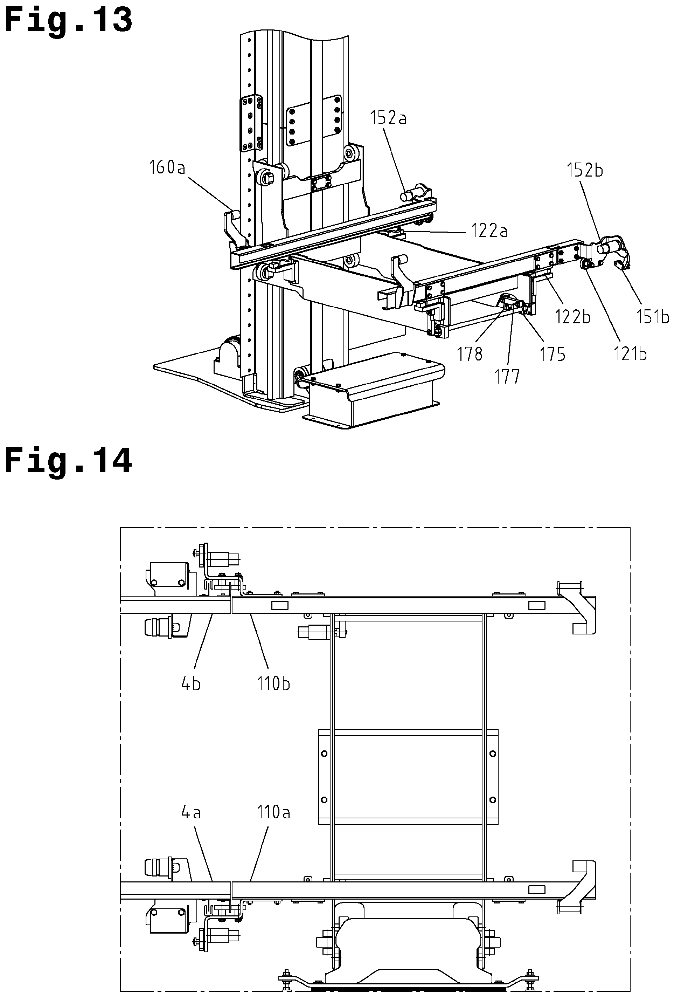

In den Fig. 12 und 14 ist die erste Koppelungsvorrichtung 111a und zweite Koppelungsvorrichtung 111b näher dargestellt. Die erste Koppelungsvorrichtung 111a umfasst eine Halterung 120a und an dieser um horizontale Achsen drehbar gelagerte Führungsräder 121a, welche an den voneinander abgewandten Führungsbahnen 117a am ersten Führungsprofil 112a abrollbar anliegen. Die Halterung 120a ist bevorzugt an der ersten Heberführungsschiene 110a befestigt, insbesondere verschraubt. Die zweite Koppelungsvorrichtung 111b umfasst eine Halterung 120b und an dieser um horizontale Achsen drehbar gelagerte Führungsräder 121b, welche an den voneinander abgewandten Führungsbahnen 117b am zweiten Führungsprofil 112b abrollbar anliegen. Die Halterung 120b ist bevorzugt an der zweiten Heberführungsschiene 110b befestigt, insbesondere verschraubt.

Die erste Führungsvorrichtung (x-Führungsvorrichtung) umfasst nach gezeigter Ausführung in einer Richtung parallel zu den Regalführungsschienen 4a verlaufende Linearführungen 122a. Die Linearführungen 122a umfassen jeweils eine Führungsschiene und einen an dieser gelagerten Führungsschlitten. Die Führungsschiene ist bevorzugt am Hubrahmen 60 gelagert und am Führungsschlitten ist die Heberführungsschiene 110a gelagert. Insbesondere ist der Führungsschlitten mit der Heberführungsschiene 110a verbunden, insbesondere verschraubt. Die zweite Führungsvorrichtung (x-Führungsvorrichtung) umfasst nach gezeigter Ausführung in einer Richtung parallel zu den Regalführungsschienen 4b verlaufende Linearführungen 122b. Die Linearführungen 122b umfassen jeweils eine Führungsschiene und einen an dieser gelagerten Führungsschlitten. Die Führungsschiene ist bevorzugt am Hubrahmen 60 gelagert und am Führungsschlitten ist die Heberführungsschiene 110b gelagert. Insbesondere ist der Führungsschlitten mit der Heberführungsschiene 110b verbunden, insbesondere verschraubt.

Wie oben beschrieben, wird das erste Führungsprofil 112a in jeder Fahrebene E2 relativ gegenüber der Stirnkante 115a der ersten Regalführungsschiene 4a positioniert und in jeder Fahrebene E2 in einem definierten Abstandsmaß zur Stirnkante 115a mit der ersten Regalführungsschiene 4a verbunden. Ebenso wird das zweite Führungsprofil 112b in jeder Fahrebene E2 relativ gegenüber der Stirnkante 115b der zweiten Regalführungsschiene 4b positioniert und in jeder Fahrebene E2 in einem definierten Abstandsmaß zur Stirnkante 115b mit der zweiten Regalführungsschiene 4b verbunden.

Aufgrund fertigungsbedingter Toleranzen und montagebedingter Abweichungen können die Stirnkanten 115a der übereinander angeordneten ersten Regalführungsschienen 4a / die Stirnkanten 115b der übereinander angeordneten zweiten Regalführungsschienen 4b nicht exakt zueinander ausgerichtet sein, sondern in Richtung der Regalgasse 3 gegenüber einer Vertikalebene versetzt. Während in einer ersten Fahrebene E2 die Stirnkante 115a der ersten Regalführungsschiene 4a / die Stirnkante 115b der zweiten Regalführungsschiene 4b an der Vertikalebene vorragen kann, kann in einer zweiten Fahrebene E2 die Stirnkante 115a der ersten Regalführungsschiene 4a / die Stirnkante 115b der zweiten Regalführungsschiene 4b vor der Vertikalebene enden.

Das erste Führungsprofil 112a wird in jeder Fahrebene E2 relativ gegenüber der (gegebenenfalls von der Vertikalebene versetzten) ersten Stirnkante 115a der ersten Regalführungsschiene 4a positioniert und in jeder Fahrebene E2 mit dem definierten Abstandsmaß zur Stirnkante 115a mit der ersten Regalführungsschiene 4a verbunden, sodass das erste Führungsprofil 112a dem Verlauf der ersten Stirnkanten 115a folgt. Ebenso wird das zweite Führungsprofil 112b in jeder Fahrebene E2 relativ gegenüber der (gegebenenfalls von der Vertikalebene versetzten) zweiten Stirnkante 115b der zweiten Regalführungsschiene 4b positioniert und in jeder Fahrebene E2 mit dem definierten Abstandsmaß zur Stirnkante 115b mit der zweiten Regalführungsschiene 4b verbunden, sodass das zweite Führungsprofil 112b dem Verlauf der zweiten Stirnkanten 115b folgt.

Besonders vorteilhaft ist, wenn die erste Heberführungsschiene 110a und die zweite Heberführungsschiene 110b unabhängig voneinander in einer Richtung parallel zu den Regalführungsschienen 4a, 4b bewegbar auf dem Hubrahmen 60 gelagert sind.

Somit kann auch eine Lageabweichung zwischen der ersten Stirnkante 115a der ersten Regalführungsschiene 4a und der zweiten Stirnkante 115b der zweiten Regalführungsschiene 4b je Fahrebene E2 zugelassen werden.

Durch die Koppelung zwischen der ersten Heberführungsschiene 110a und dem (vertikalen) ersten Führungsprofil 112a kann die erste Heberführungsschiene 110a dem Längsverlauf des ersten Führungsprofils 112a folgen. Ebenso kann durch die Koppelung zwischen der zweiten Heberführungsschiene 110a und dem (vertikalen) zweiten Führungsprofil 112b die zweite Heberführungsschiene 110b dem Längsverlauf des zweiten Führungsprofils 112b folgen.

Wie auch aus den Fig. 11 und 12 ersichtlich, erweist es sich von Vorteil, wenn die erste Heberführungsschiene 110a eine Lauffläche 123a und eine in dieser vertieft angeordnete Positionieröffnung 124 aufweist. Die Positionieröffnung 124 ist an einem der Regalgasse 3 abgewandten Endbereich der ersten Heberführungsschiene 110a angeordnet, in welcher eines der auf einer ersten Fahrzeugseite des Transportfahrzeugs 5 angeordneten Laufräder 16 mit einem Teilabschnitt einliegt, wenn das Transportfahrzeug 5 auf der Aufnahmevorrichtung 61 positioniert ist. Die zweite Heberführungsschiene 110b weist eine Lauffläche 123b und auf dieser mit gegenseitigem Abstand angeordnete Gleitbeläge 125 auf, sodass die auf einer zweiten Fahrzeugseite des Transportfahrzeugs 5 angeordneten Laufräder 16 auf den Gleitbelägen 125 aufliegen, wenn das Transportfahrzeug 5 auf der Aufnahmevorrichtung 61 positioniert ist.

In den Fig. 5, 11 und 14 ist auch ein erstes Positioniersystem ersichtlich, welches mit dem Hubmotor 89 des Hubantriebs zusammenwirkt, um eine der Heberführungsschienen 4a, 4b gegenüber eine der ersten und zweiten Regalführungsschienen 4a, 4b auf einer Fahrebene E2 (vertikal) zu positionieren. Im gezeigten Ausführungsbeispiel wird die erste Heberführungsschiene 4a gegenüber eine der ersten Regalführungsschienen 4a auf einer Fahrebene E2 (vertikal) positioniert.

Das erste Positioniersystem kann ein "Grobpositioniersystem" und ein "Feinpositioniersystem" umfassen.

Das "Grobpositioniersystem" kann durch ein ausschließlich in Fig. 5 schematisch eingetragenes optisches Lasermesssystem 131 (optische Laser Distanzmessung) gestaltet werden, das mit dem Hubmotor 89 zusammenwirkt und durch welches der Hubrahmen 60 über den Hubmotor 89 in eine Referenzposition positioniert wird. Der Lasersensor des optischen Lasermesssystem 131 ist vorzugsweise am Hubrahmen 60 montiert.

Eine solche Höhenpositionierung kann aber noch unzureichend genau sein, beispielweise wenn im Betrieb durch Setzung der Lagerregale 2a, 2b mit einer Höhenänderung der Regalführungsschienen 4a, 4b zu rechnen ist. In diesem Fall ist es von Vorteil, wenn zusätzlich das "Feinpositioniersystem" vorgesehen wird.

Das "Feinpositioniersystem" kann eine erste Gabellichtschranke 132a umfassen, welche an der Heberführungsschiene 110a gelagert ist, und eine Positionsmarke umfassen, welche der Regalführungsschiene 4a zugeordnet ist. Die Positionsmarke ist beispielweise eine Referenzieröffnung 133a. Die Referenzieröffnung 133a ist beispielsweise an einem in Fig. 11 dargestellten Winkelblech vorgesehen. Alternativ kann die Referenzieröffnung 133a an der Regalführungsschiene 4a vorgesehen werden. Es sei darauf hingewiesen, dass aus Gründen der besseren Übersicht in Fig. 11 die Positionsmarke ausschließlich auf einer Fahrebene E2 dargestellt ist. Grundsätzlich ist jeder Regalführungsschiene 4a (daher jeder Fahrebene E2) eine Positionsmarke zugeordnet.

Die erste Gabellichtschranke 132a kann einen unteren Lichtstrahl (Laserlicht) und einen oberen Lichtstrahl (Laserlicht) umfassen, durch welche ein Arbeitsbereich definiert wird. Befindet sich die Referenzieröffnung 133a im Arbeitsbereich der ersten Gabellichtschranke, daher liegen der untere Lichtstrahl und obere Lichtstrahl innerhalb der Referenzieröffnung 133a entspricht die Istposition einer Referenzposition. Stimmen die Istposition und Referenzposition überein, ist die Heberführungsschiene 110a gegenüber der Regalführungsschiene 4a exakt positioniert. Liegt einer der unteren und obere Lichtstrahlen außerhalb der Referenzieröffnung 133a im Winkelblech, dann ist einer der Lichtstrahlen zwischen Sender und Empfänger unterbrochen und es wird der Hubmotor 89 angesteuert und der Hubrahmen 60 verstellt, bis wiederum der untere Lichtstrahl und obere Lichtstrahl innerhalb der Referenzieröffnung 133a liegen.

Liegen nach dem Nachpositionieren des Hubrahmens 60 / der Aufnahmevorrichtung 61 der untere Lichtstrahl und obere Lichtstrahl innerhalb der Referenzieröffnung 133a entspricht die Istposition einer korrigierten Referenzposition. Die korrigierte Referenzposition wird von der Steuerung gespeichert, sodass eine sich wiederholende Höhenposition auf dieser Fahrebene E2 durch die korrigierte Referenzposition definiert wird. Somit kann der Positioniervorgang der Heberführungsschiene 110a relativ gegenüber der Regalführungsschiene 4a beschleunigt werden, da das neuerliche Festlegen einer korrigierten Referenzposition erst wiederum bei einer Abweichung der Istposition von der korrigierten Referenzposition erforderlich ist.

Das beschriebene erste Positioniersystem stellt eine von vielen Möglichkeiten dar, wie die Höhenpositionierung der ersten Heberführungsschiene 110a relativ zur ersten Regalführungsschiene 4a erfolgen kann. Aus dem Stand der Technik sind auch "Feinpositioniersysteme" bekannt, welche eine Kamera und ein Bildverarbeitungsprogramm, oder einen Barcode und ein Barcodelesegerät umfassen. In diesem Fall kann das erste Positioniersystem auch bloß das "Feinpositioniersystem" umfassen.

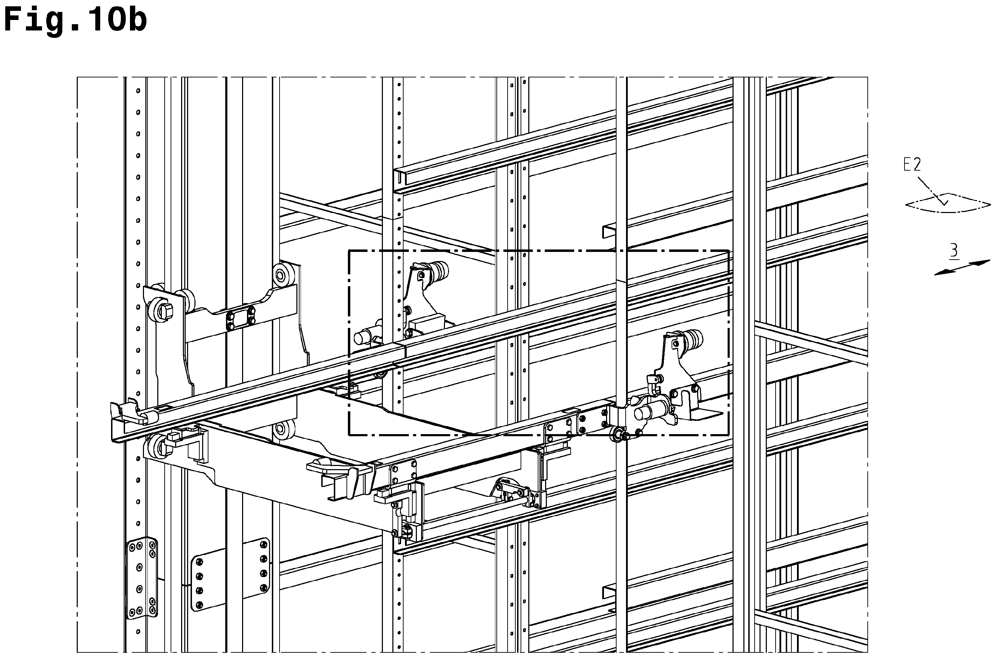

Wie in den Fig. 10a, 10b und 10d besser ersichtlich, kann an dem der Transportfahrzeug-Hebevorrichtung 6 benachbarten Regalgassenende und je Fahrebene E2 eine Anschlagvorrichtung vorgesehen sein, wobei jede Anschlagvorrichtung zwischen einer in den Fahrweg des Transportfahrzeugs 5 hineinbewegten Anschlagstellung (Fig. 10a) und einer aus dem Fahrweg des Transportfahrzeugs 5 herausbewegten Freigabestellung (Fig. 10b, Fig. 10d) bewegbare Anschlagpuffer 150a, 150b umfasst. Jeder Anschlagpuffer 150a, 150b ist auf einer Schwenkklappe angeordnet, deren Schwenkachse parallel zur Regalgasse 3 verläuft.

Es sei darauf hingewiesen, dass in Fig. 1b aus Gründen der besseren Übersicht die Anschlagpuffer 150a, 150b ausschließlich in einer der Fahrebenen E2 dargestellt ist. Grundsätzlich sind in jeder Fahrebene E2 die Anschlagpuffer 150a, 150b angeordnet.

Der Hubrahmen 60 ist auf einer der Regalgasse 3 benachbarten Seite mit einer Betätigungsvorrichtung versehen ist, welche ein erstes Betätigungselement 151a und ein zweites Betätigungselement 151b umfasst, wie in den Fig. 12 und 13 eingetragen.

Das erste Betätigungselement 151a ist einem ersten Anschlagpuffer 150a zugeordnet und weist einen ersten Schwenkhebel auf, deren Schwenkachse parallel zur Regalgasse 3 verläuft. Der erste Anschlagpuffer 150a kann von dem ersten Betätigungselement 151a aus der in den Fahrweg des Transportfahrzeugs 5 hineinbewegten Anschlagstellung in die aus dem Fahrweg des Transportfahrzeugs 5 herausbewegten Freigabestellung bewegt werden. Zweckmäßigerweise ist das erste Betätigungselement 151a mit einem ersten Antriebsmotor 152a gekuppelt. Es kann sich auch von Vorteil erweisen, wenn das erste Betätigungselement 151a an der ersten Heberführungsschiene 110a gelagert ist.

Das zweite Betätigungselement 151b ist einem zweiten Anschlagpuffer 150b zugeordnet und weist einen zweiten Schwenkhebel auf, deren Schwenkachse parallel zur Regalgasse 3 verläuft. Der zweite Anschlagpuffer 150b kann von dem zweiten Betätigungselement 151b aus der in den Fahrweg des Transportfahrzeugs 5 hineinbewegten Anschlagstellung in die aus dem Fahrweg des Transportfahrzeugs 5 herausbewegten Freigabestellung bewegt werden.

Zweckmäßigerweise ist das zweite Betätigungselement 151b mit einem zweiten Antriebsmotor 152b gekuppelt. Es kann sich auch von Vorteil erweisen, wenn das zweite Betätigungselement 151b an der zweiten Heberführungsschiene 110b gelagert ist.

Wie in den Fig. 12 und 13 eingetragen, kann der Hubrahmen 60 auf einer der Regalgasse 3 abgewandten Seite mit einem ersten Anschlagpuffer 160a und zweiten Anschlagpuffer 160b versehen werden.

Der erste Anschlagpuffer 160a ist der ersten Heberführungsschiene 110a zugeordnet und zwischen einer in den Fahrweg des Transportfahrzeugs 5 hineinbewegten Anschlagstellung (Fig. 12) und einer aus dem Fahrweg des Transportfahrzeugs 5 herausbewegten Freigabestellung (Fig. 13) bewegbar. Der erste Anschlagpuffer 160a kann einen ersten Schwenkhebel aufweisen, deren Schwenkachse parallel zur Regalgasse 3 verläuft. Es kann sich von Vorteil erweisen, wenn der erste Anschlagpuffer 160a an der ersten Heberführungsschiene 110a gelagert ist.

Der zweite Anschlagpuffer 160b ist der zweiten Heberführungsschiene 110b zugeordnet und zwischen einer in den Fahrweg des Transportfahrzeugs 5 hineinbewegten Anschlagstellung (Fig. 12) und einer aus dem Fahrweg des Transportfahrzeugs 5 herausbewegten Freigabestellung (Fig. 13) bewegbar. Der zweite erste Anschlagpuffer 160b kann einen zweiten Schwenkhebel aufweisen, deren Schwenkachse parallel zur Regalgasse 3 verläuft. Es kann sich von Vorteil erweisen, wenn zweite Anschlagpuffer 160b an der zweiten Heberführungsschiene 110b gelagert ist.

Eine besonders vorteilhafte Ausgestaltung der Transportfahrzeug-Hebevorrichtung 6 wird anhand der Fig. 5, 11 und 12 beschrieben.

Gemäß dieser Ausführung ist es vorgesehen, dass eine der Heberführungsschienen 110a, 110b durch einen Stellantrieb 170 in einer Richtung senkrecht zur Fahrebene E2 verstellbar auf dem Hubrahmen 60 gelagert ist.

Der Stellantrieb 170 umfasst einen Stellmotor 171, welcher mit einem zweiten Positioniersystem zusammenwirkt, um die genannte Heberführungsschiene 110a, 110b gegenüber eine der Regalführungsschienen 4a, 4b einer der Fahrebenen E2 zu positionieren. Der Stellmotor 171 ist beispielsweise ein Servomotor mit einem Drehgeber, beispielweise ein Inkrementalgeber.

Die genannte Heberführungsschiene 110b kann zwischen einer unteren Relativposition (siehe strichpunktierte Ebene Y1 in Fig. 12) und einer oberen Relativposition (siehe strichpunktierte Ebene Y2 in Fig. 12) insbesondere stufenlos verstellt werden.

Im gezeigten Ausführungsbeispiel ist die zweite Heberführungsschiene 110b durch den Stellantrieb 170 in einer Richtung senkrecht zur Fahrebene E2 verstellbar auf dem Hubrahmen 60 gelagert und wird die zweite Heberführungsschiene 110b gegenüber einer der zweiten Regalführungsschienen 4b einer der Fahrebenen E2 positioniert.

Eine der Heberführungsschienen 110a, 110b ist über eine Führungsvorrichtung (z-Führungsvorrichtung) in einer senkrechten Richtung zur Fahrebene E2 bewegbar auf dem Hubrahmen 60 gelagert. Im gezeigten Ausführungsbeispiel ist die zweite Heberführungsschiene 110b über die Führungsvorrichtung (z-Führungsvorrichtung) in einer senkrechten Richtung zur Fahrebene E2 bewegbar auf dem Hubrahmen 60 gelagert.

Wie man erkennen wird, kann zu dem "Höhenpositionieren" der ersten Heberführungsschiene 110a relativ gegenüber eine der ersten Regalführungsschienen 4a zusätzlich noch die zweite Heberführungsschiene 110b unabhängig von der ersten Heberführungsschiene 110a relativ gegenüber eine der zweiten Regalführungsschienen 4b in einer senkrechten Richtung zur Fahrebene E2 bewegt werden.

Die Führungsvorrichtung (z-Führungsvorrichtung) umfasst nach gezeigter Ausführung in senkrechter Richtung zur Fahrebene E2 verlaufende Linearführungen 172. Die Linearführungen 172 umfassen jeweils eine Führungsschiene und einen an dieser gelagerten Führungsschlitten. Die Führungsschiene ist bevorzugt am Hubrahmen 60 gelagert und am Führungsschlitten ist die Heberführungsschiene 110b gelagert.

Kann die zweite Heberführungsschiene 110b über die zweite Koppelungsvorrichtung 110b auch in einer Richtung parallel zu Regalgasse 3 relativ zu den zweiten Regalführungsschienen 4b bewegt werden, so kann es sich von Vorteil erweisen, wenn die zweite Heberführungsschienen 110b über die x-Führungsvorrichtung auf der z-Führungsvorrichtung gelagert ist.

Im gezeigten Ausführungsbeispiel ist die Führungsschiene der x-Führungsvorrichtung über einen Montagewinkel 173 am Führungsschlitten der z-Führungsvorrichtung befestigt, insbesondere verschraubt.

Wie in der Zusammenschau der Fig. 11 und 12 ersichtlich, kann das zweite Positioniersystem eine zweite Gabellichtschranke 132b umfassen, welche an der Heberführungsschiene 110b gelagert ist, und eine Positionsmarke umfassen, welche der Regalführungsschiene 4b zugeordnet ist. Die Positionsmarke ist beispielweise eine Referenzieröffnung 133b. Die Referenzieröffnung 133b ist beispielsweise an einem in Fig. 11 dargestellten Winkelblech vorgesehen. Alternativ kann die Referenzieröffnung 133b an der Regalführungsschiene 4b vorgesehen werden.

Die zweite Gabellichtschranke 132b kann einen unteren Lichtstrahl (Laserlicht) und einen oberen Lichtstrahl (Laserlicht) umfassen, durch welche ein Arbeitsbereich definiert wird. Befindet sich die Referenzieröffnung 133b im Arbeitsbereich der zweiten Gabellichtschranke, daher liegen der untere Lichtstrahl und obere Lichtstrahl innerhalb der Referenzieröffnung 133b entspricht die Istposition einer Referenzposition. Stimmen die Istposition und Referenzposition überein, ist die Heberführungsschiene 110b gegenüber der Regalführungsschiene 4b exakt positioniert. Liegt einer der unteren und obere Lichtstrahlen außerhalb der Referenzieröffnung 133b im Winkelblech, dann ist einer der Lichtstrahlen zwischen Sender und Empfänger unterbrochen und es wird der Stellmotor 171 angesteuert und die Heberführungsschiene 110b verstellt, bis wiederum der untere Lichtstrahl und obere Lichtstrahl innerhalb der Referenzieröffnung 133b liegen.

Liegen nach dem Nachpositionieren der zweiten Heberführungsschiene 110b der untere Lichtstrahl und obere Lichtstrahl innerhalb der Referenzieröffnung 133a entspricht die Istposition einer korrigierten Referenzposition. Die korrigierte Referenzposition wird von der Steuerung gespeichert, sodass eine sich wiederholende Höhenposition auf dieser Fahrebene E2 durch die korrigierte Referenzposition definiert wird. Somit kann der Positioniervorgang der Heberführungsschiene 110b relativ gegenüber der Regalführungsschiene 4b beschleunigt werden, da das neuerliche Festlegen einer korrigierten Referenzposition erst wiederum bei einer Abweichung der Istposition von der korrigierten Referenzposition erforderlich ist.

Es erweist sich von Vorteil, wenn der Positioniervorgang der zweiten Heberführungsschiene 110b nach dem Positioniervorgang der ersten Heberführungsschiene 110a erfolgt.

Das beschriebene zweite Positioniersystem stellt eine von vielen Möglichkeiten dar, wie die Höhenpositionierung der zweiten Heberführungsschiene 110b relativ zur Regalführungsschiene 4b erfolgen kann. Aus dem Stand der Technik sind auch Positioniersysteme bekannt, welche eine Kamera und ein Bildverarbeitungsprogramm, oder einen Barcode und ein Barcodelesegerät umfassen.

Aus der Zusammenschau der Fig. 11, 12 und 13 ist auch der Stellantrieb 170 ersichtlich. Nach gezeigter Ausführung, umfasst der Stellantrieb 170 den am Hubrahmen 60 gelagerten Stellmotor 171, eine am Hubrahmen 60 drehbar gelagerte Drehachse 174, einen an dieser drehfest verbundenen ersten Stellhebel 175 und an dieser drehfest verbundene zweite Stellhebel 176. Der erste Stellhebel 175 ist über einen dritten Stellhebel 177 und vierten Stellhebel 178 mit dem Stellantrieb 170 gekuppelt. Die zweiten Stellhebel 176 sind jeweils über einen fünften Stellhebel 179 mit den z-Linearführungen, insbesondere den Schlitten und den Montagewinkeln 173 gekuppelt.

Das beschriebene Stellantrieb 170 stellt eine von vielen Möglichkeiten dar, wie die Höhenpositionierung der zweiten Heberführungsschiene 110b relativ zur zweiten Regalführungsschiene 4b erfolgen kann. Beispielweise können elektrisch betätigte Linearantriebe eingesetzt werden, welche gleichzeitig die z-Führungsvorrichtungen ausbilden. In diesem Fall sind die x-Führungsvorrichtungen gegebenenfalls über die Montagewinkeln 173 jeweils am Schlitten der Linearantriebe gelagert. Der Stellantrieb 170 umfasst also bloß Linearantriebe, von den Linearantrieben getrennte z-Führungsvorrichtungen können entfallen.

Auch kann es sich vorheilhaft erweisen, wenn die korrigierte Referenzposition für die erste Heberführungsschiene 110a und/oder die korrigierte Referenzposition für die zweite Heberführungsschienen 110b von der Steuerung derart vorgegeben wird / werden, dass eine Gewichtskraft (Transportfahrzeug unbeladen oder Transportfahrzeug beladen) berücksichtigt wird. Die Steuerung ist dazu ausgebildet basierend auf der Gewichtskraft einen Höhenausgleichsfaktor zu berechnen. Die korrigierte Referenzposition für die erste Heberführungsschienen 110a und/oder korrigierte Referenzposition für die zweite Heberführungsschienen 110b wird / werden mit dem Höhenausgleichsfaktor beaufschlagt. Grundsätzlich wird in aller Regel die korrigierte Referenzposition etwas oberhalb der Fahrebene E2 liegen. Sobald das Transportfahrzeug 5 auf die Heberführungsschienen 110a, 110b auffährt, sind die erste Regalführungsschiene 4a und die erste Heberführungsschiene 110a als auch die zweite Regalführungsschiene 4b und die zweite Heberführungsschiene 110b in der entsprechenden Fahrebene E2 in vertikaler Richtung exakt zueinander positioniert. Das Überfahren des Transportfahrzeugs 5 auf die Aufnahmevorrichtung 61 kann hochdynamisch und besonders schonend erfolgen.

### Bezugszeichenaufstellung

- E1: Lagerebene
- E2: Fahrebene
- E3: Wartungsebene
- FE: Führungsebene
- 2a, 2b: Lagerregal

- 3: Regalgasse
- 4a, 4b: Regalführungsschiene
- 5: Transportfahrzeug
- 6: Transportfahrzeug-Hebevorrichtung
- 7: Lagerplatz

- 8: Ladegut
- 9: erste Führung
- 10: zweite Führung
- 11a, 11b: vorderer Regalsteher
- 12a, 12b: hinterer Regalsteher

- 13a, 13b: Regalboden
- 15: Grundrahmen
- 16: Laufrad
- 17: Führungsrad
- 19: Ein- und Auslagervorrichtung

- 20: Ladegut-Manipulationseinheit
- 21a, 21b: Ladegut-Transportvorrichtung (Einlagerung, Auslagerung)
- 22a, 22b: Puffervorrichtung (Einlagerung, Auslagerung)
- 23: Vertikalmast
- 24: Hubführung

- 25a, 25b: Antriebsstation
- 26a, 26b: Zugmitteltrieb
- 27a, 27b: Hubrahmen
- 28a, 28b: Transportvorrichtung
- 29a, 29b: Bereitstellvorrichtung

- 30: Deformationsvorrichtung
- 31a, 31b: Fördertechnik
- 32a, 32b: Montagetraverse
- 33: Gehsteg
- 46a: vorderer Regalsteher

- 47a: hinterer Regalsteher
- 48a: vordere Montagetraverse
- 49a: hintere Montagetraverse

- 50a: erstes Rahmenprofil
- 51a: zweites Rahmenprofil
- 52: Gehsteg
- 53: Leiter
- 59: Führungsrahmen

- 60: Hubrahmen
- 61: Aufnahmevorrichtung
- 62: Montageabschnitt
- 63: Befestigungselement
- 64: Verbindungsmittel

- 65: Futterplatte
- 70: Führungsrahmensegment
- 71a, 71b: Verbindungsplatte
- 72: Profilbasis
- 73: Profilschenkel
- 74: Montageschenkel

- 75: Verbindungsstrebe
- 81a, 81b: Führungsleiste
- 82: Verbindungsmittel
- 83: Stoßverbindung
- 89: Hubmotor

- 90: Antriebsrad
- 91a, 91b: unteres Umlenkrad / oberes Umlenkrad
- 92: Führungsrad
- 93: Zugmittel
- 94: Klemme

- 100: Deformationsvorrichtung
- 101: Kraftverteilplatte
- 102: Wabenkörper
- 103: Montageplatte
- 104a, 104b: Führungsrad

- 110a, 110b: Heberführungsschiene
- 111a, 111b: Koppelungsvorrichtung
- 112a, 112b: Führungsprofil
- 113a, 113b: Verbindungsmittel
- 114a, 114b: Durchgangsöffnung

- 115a, 115b: Stirnkante
- 116a, 116b: Durchgangsöffnung
- 117a, 117b: Führungsbahn
- 120a, 120b: Halterung
- 121a, 121b: Führungsrad
- 122a, 122b: Linearführung

- 123a, 123b: Lauffläche
- 124: Positionieröffnung
- 125: Gleitbelag

- 131: Lasermesssystem
- 132a, 132b: Gabellichtschranke
- 133a, 133b: Referenzieröffnung
- 150a, 150b: Anschlagpuffer
- 151a, 151b: Betätigungselement

- 152a, 152b: Antriebsmotor
- 160a, 160b: Anschlagpuffer
- 170: Stellantrieb
- 171: Stellmotor
- 172: Linearführung

- 173: Montagewinkel
- 174: Drehachse
- 175: erster Stellhebel
- 176: zweiter Stellhebel
- 177: dritter Stellhebel

- 178: vierter Stellhebel
- 179: fünfter Stellhebel

## Patentansprüche

1. Regallagersystem umfassend
ein erstes Lagerregal (2a) mit Lagerplätzen (7) für Ladegüter (8), die in übereinander liegenden Lagerebenen (E1) nebeneinander angeordnet sind,
ein zweites Lagerregal (2b) mit Lagerplätzen (7) für Ladegüter (8), die in übereinander liegenden Lagerebenen (E1) nebeneinander angeordnet sind,
eine Regalgasse (3) zwischen dem ersten Lagerregal (2a) und dem zweiten Lagerregal (2b),
Regalführungsschienen (4a, 4b), welche am ersten Lagerregal (2a) und zweiten Lagerregal (2b) befestigt und in übereinander liegenden Fahrebenen (E2) jeweils paarweise angeordnet sind,
zumindest ein automatisiertes Transportfahrzeug (5), welches in der Regalgasse (3) entlang der Regalführungsschienen (4a, 4b) verfahrbar ist, um die Ladegüter (8) auf die Lagerplätze (7) einzulagern und von den Lagerplätzen (7) auszulagern, und
eine Transportfahrzeug-Hebevorrichtung (6) mit einem vertikal erstreckenden Führungsrahmen (59) und einer an diesem über einen Hubantrieb verstellbar gelagerten Aufnahmevorrichtung (61), welche in einer Richtung parallel zu den Regalführungsschienen (4a, 4b) verlaufende und relativ gegenüber den Regalführungsschienen (4a, 4b) positionierbare Heberführungsschienen (110a, 110b) umfasst und durch welche das Transportfahrzeug (5) zwischen den Fahrebenen (E2) transportierbar ist,
wobei der Hubantrieb einen Hubmotor (89) umfasst, welcher mit einem ersten Positioniersystem zusammenwirkt, um die Heberführungsschienen (110a, 110b) gegenüber den Regalführungsschienen (4a, 4b) auf einer Fahrebene (E2) zu positionieren,
**dadurch gekennzeichnet, dass**
eine der Heberführungsschienen (110a, 110b) durch einen Stellantrieb (170) in einer Richtung senkrecht zur Fahrebene (E2) verstellbar auf dem Hubrahmen (60) gelagert ist, und
der Stellantrieb (170) einen Stellmotor (171) umfasst, welcher mit einem zweiten Positioniersystem zusammenwirkt, um die genannte Heberführungsschiene (110a, 110b) relativ gegenüber die andere der Heberführungsschiene (110a, 110b) und gegenüber eine der Regalführungsschienen (4a, 4b) einer der Fahrebenen (E2) zu positionieren.

2. Regallagersystem nach Anspruch 1, **dadurch gekennzeichnet, dass**
die Aufnahmevorrichtung (61) auf einem Hubrahmen (60) angeordnet ist, welcher über den Hubantrieb verstellbar am Führungsrahmen (59) gelagert ist,
ein erstes Führungsprofil (112a) vorgesehen ist, welches im Wesentlichen parallel zum Führungsrahmen (59) verläuft und mit den Regalführungsschienen (4a, 4b) am ersten Lagerregal (2a) verbunden ist,
ein zweites Führungsprofil (112b) vorgesehen ist, welches im Wesentlichen parallel zum Führungsrahmen (59) verläuft und mit den Regalführungsschienen (4a, 4b) am zweiten Lagerregal (2b) verbunden ist,
eine erste Heberführungsschiene (110a) der Heberführungsschienen (110a, 110b) über eine erste Führungsvorrichtung in einer Richtung parallel zu den Regalführungsschienen (4a) bewegbar auf dem Hubrahmen (60) gelagert und über eine erste Koppelungsvorrichtung (111a) mit dem ersten Führungsprofil (112a) gekoppelt ist, und
eine zweite Heberführungsschiene (110b) der Heberführungsschienen (110a, 110b) über eine zweite Führungsvorrichtung in einer Richtung parallel zu den Regalführungsschienen (4b) bewegbar auf dem Hubrahmen (60) gelagert und über eine zweite Koppelungsvorrichtung (111b) mit dem zweiten Führungsprofil (112b) gekoppelt ist.

3. Regallagersystem nach Anspruch 2, **dadurch gekennzeichnet, dass** die erste Koppelungsvorrichtung (111a) eine Halterung (120a) und an dieser um horizontale Achsen drehbar gelagerte Führungsräder (121a) umfasst, welche an voneinander abgewandten Führungsbahnen (117a) am ersten Führungsprofil (112a) abrollbar anliegen, und die zweite Koppelungsvorrichtung (111b) eine Halterung (120b) und an dieser um horizontale Achsen drehbar gelagerte Führungsräder (121b) umfasst, welche an voneinander abgewandten Führungsbahnen (117b) am zweiten Führungsprofil (112b) abrollbar anliegen.

4. Regallagersystem nach Anspruch 2, **dadurch gekennzeichnet, dass** der Führungsrahmen (59) eine Führungsanordnung umfasst und der Hubantrieb einen Hubmotor (89) und einen Zugmitteltrieb umfasst, wobei der Hubrahmen (60) mit dem Zugmitteltrieb gekoppelt und über Führungsrollen (104a, 104b) an der Führungsanordnung gelagert ist.

5. Regallagersystem nach einem der Ansprüche 2 bis 4, **dadurch gekennzeichnet, dass**
die erste Regalführungsschiene (4a) in einem der Transportfahrzeug-Hebevorrichtung (6) benachbarten Ende einen Montageabschnitt ausbildet, in welchem eine vorgefertigte Durchgangsöffnung (114a) in einem Abstandsmaß zur Stirnkante (115a) der ersten Regalführungsschiene (4a) vorgesehen ist,
das erste Führungsprofil (112a) eine Reihe vorgefertigter Durchgangsöffnungen (116a) ausbildet,
die erste Regalführungsschiene (4a) und das erste Führungsprofil (112a) über zumindest ein Verbindungsmittel (113a), insbesondere einer Schraube, miteinander verbunden sind, welches die Durchgangsöffnungen (114a, 116a) durchsetzt,
die zweite Regalführungsschiene (4b) in einem der Transportfahrzeug-Hebevorrichtung (6) benachbarten Ende einen Montageabschnitt ausbildet, in welchem eine vorgefertigte Durchgangsöffnung (114b) in einem Abstandsmaß zur Stirnkante (115b) der zweiten Regalführungsschiene (4b) vorgesehen ist,
das zweite Führungsprofil (112b) eine Reihe vorgefertigter Durchgangsöffnungen (116b) ausbildet, und
die zweite Regalführungsschiene (4b) und das zweite Führungsprofil (112b) über zumindest ein Verbindungsmittel (113b), insbesondere einer Schraube, miteinander verbunden sind, welches die Durchgangsöffnungen (114b, 116b) durchsetzt.

6. Regallagersystem nach Anspruch 2, **dadurch gekennzeichnet, dass** die Transportfahrzeug-Hebevorrichtung (6) eine energieabsorbierende Deformationsvorrichtung (100) umfasst, welche unterhalb des Hubrahmens (60) ortsfest angeordnet ist.

7. Regallagersystem nach Anspruch 2, **dadurch gekennzeichnet, dass** an dem der Transportfahrzeug-Hebevorrichtung (6) benachbarten Regalgassenende und je Fahrebene (E2) eine Anschlagvorrichtung vorgesehen sind, welche jeweils zwischen einer in den Fahrweg des Transportfahrzeugs (5) hineinbewegten Anschlagstellung und einer aus dem Fahrweg des Transportfahrzeugs (5) herausbewegten Freigabestellung bewegbare Anschlagpuffer (150a, 150b) umfasst.

8. Regallagersystem nach Anspruch 7, **dadurch gekennzeichnet, dass** jeder Anschlagpuffer (150a, 150b) auf einer Schwenkklappe angeordnet ist, deren Schwenkachse parallel zur Regalgasse (3) verläuft.

9. Regallagersystem nach einem der Ansprüche 2 bis 11, **dadurch gekennzeichnet, dass** der Hubrahmen (60) und/oder die Aufnahmevorrichtung (61) auf einer der Regalgasse (3) benachbarten Seite mit einer Betätigungsvorrichtung versehen ist, welche ein erstes Betätigungselement (151a) und ein zweites Betätigungselement (151b) umfasst, wovon das erste Betätigungselement (151a) einem ersten Anschlagpuffer (150a) der Anschlagpuffer (150a, 150b) zugeordnet ist und durch welches der erste Anschlagpuffer (150a) aus der in den Fahrweg des Transportfahrzeugs (5) hineinbewegten Anschlagstellung in die aus dem Fahrweg des Transportfahrzeugs (5) herausbewegten Freigabestellung bewegbar ist, und wovon das zweite Betätigungselement (150b) einem zweiten Anschlagpuffer (150b) der Anschlagpuffer (150a, 150b) zugeordnet ist und durch welches der zweite Anschlagpuffer (150b) aus der in den Fahrweg des Transportfahrzeugs (5) hineinbewegten Anschlagstellung in die aus dem Fahrweg des Transportfahrzeugs (5) herausbewegten Freigabestellung bewegbar ist.

10. Regallagersystem nach Anspruch 9, **dadurch gekennzeichnet, dass** das erste Betätigungselement (151a) an der ersten Heberführungsschiene (110a) gelagert und/oder das zweite Betätigungselement (151b) an der zweiten Heberführungsschiene (110b) gelagert ist.

11. Regallagersystem nach einem der Ansprüche 2 bis 10, **dadurch gekennzeichnet, dass** der Hubrahmen (60) und/oder die Aufnahmevorrichtung (61) auf einer der Regalgasse (3) abgewandten Seite mit einem ersten Anschlagpuffer (160a) und zweiten Anschlagpuffer (160b) versehen ist, wovon der erste Anschlagpuffer (160a) der ersten Heberführungsschiene (110a) zugeordnet und zwischen einer in den Fahrweg des Transportfahrzeugs (5) hineinbewegten Anschlagstellung und einer aus dem Fahrweg des Transportfahrzeugs (5) herausbewegten Freigabestellung bewegbar ist, und wovon der zweite Anschlagpuffer (160b) der zweiten Heberführungsschiene (110b) zugeordnet und zwischen einer in den Fahrweg des Transportfahrzeugs (5) hineinbewegten Anschlagstellung und einer aus dem Fahrweg des Transportfahrzeugs (5) herausbewegten Freigabestellung bewegbar ist.

12. Regallagersystem nach Anspruch 11, **dadurch gekennzeichnet, dass** der erste Anschlagpuffer (160a) an der ersten Heberführungsschiene (110a) gelagert ist und/oder der zweite Anschlagpuffer (160b) an der zweiten Heberführungsschiene (110b) gelagert ist.

13. Regallagersystem nach einem der Ansprüche 2 bis 12, **dadurch gekennzeichnet, dass** die erste Heberführungsschiene (110a) eine Lauffläche (123a) und eine in dieser vertieft angeordnete Positionieröffnung (124) aufweist, welche an einem der Regalgasse (3) abgewandten Endbereich angeordnet ist und in welcher eines der auf einer ersten Fahrzeugseite des Transportfahrzeugs (5) angeordneten Laufräder (16) mit einem Teilabschnitt einliegt, wenn das Transportfahrzeug (5) auf der Aufnahmevorrichtung (61) positioniert ist.

14. Regallagersystem nach einem der Ansprüche 2 bis 13, **dadurch gekennzeichnet, dass** die zweite Heberführungsschiene (110b) eine Lauffläche (123b) und auf dieser mit gegenseitigem Abstand angeordnete Gleitbeläge (125) aufweist, sodass die auf einer zweiten Fahrzeugseite des Transportfahrzeugs (5) angeordneten Laufräder (16) auf den Gleitbelägen (125) aufliegen, wenn das Transportfahrzeug (5) auf der Aufnahmevorrichtung (61) positioniert ist.

15. Regallagersystem nach Anspruch 2, umfassend
eine Fördertechnik zum Transport von Ladegütern (8), und
eine Ladegut-Manipulationseinheit (20), an welche die Fördertechnik zum Transport von Ladegütern (8) anschließt und welche zum Einlagern von Ladegütern (8) eine erste Ladegut-Transportvorrichtung (21a) und eine erste Puffervorrichtung (22a) und zum Auslagern von Ladegütern (8) eine zweite Ladegut-Transportvorrichtung (21b) und eine zweite Puffervorrichtung (22b) aufweist,
wobei die erste Puffervorrichtung (21a) in übereinander liegenden Bereitstellebenen angeordnete Bereitstellvorrichtungen (29a) und die zweite Puffervorrichtung (21b) in übereinander liegenden Bereitstellebenen angeordnete Bereitstellvorrichtungen (29b) aufweist,
wobei die erste Ladegut-Transportvorrichtung (21a) die Fördertechnik zum Transport von Ladegütern (8) und die Bereitstellvorrichtungen (29a) der ersten Puffervorrichtung (22a) fördertechnisch verbindet,
wobei die zweite Ladegut-Transportvorrichtung (21b) die Fördertechnik zum Transport von Ladegütern (8) und die Bereitstellvorrichtungen (29b) der zweiten Puffervorrichtung (22b) fördertechnisch verbindet, und
wobei das zumindest eine automatisierte Transportfahrzeug (5) in der Regalgasse (3) entlang der Regalführungsschienen (4a, 4b) vor den Lagerplätzen (7), der ersten Puffervorrichtung (22a) und zweiten Puffervorrichtung (22b) verfahrbar ist und die Ladegüter (8) zwischen der ersten Puffervorrichtung (22a) und den Lagerplätzen (7) oder zwischen den Lagerplätzen (7) und der zweiten Puffervorrichtung (22b) transportiert.
